# EUROPEAN PATENT APPLICATION

(11) **EP 2 075 704 A1**
(43) Date of publication of application: **01.07.2009**
(21) Application number: 08172392.6
(22) Date of filing: 19.12.2008
(51) Int. Cl.: G06F 12/08

(54) **Cache memory system and cache memory control method**

(30) Priority: 26.12.2007 JP 2007334455
(71) Applicant: NEC Corporation, Minato-ku Tokyo (JP)
(72) Inventor: Kanoh, Yasushi, Minato-ku, Tokyo (JP)
(74) Representative: Betten & Resch

(57) **Abstract**

A cache memory system that is connected to a computation device and a memory device includes: a data array that includes a plurality of blocks composed of a plurality of words; a storage unit that, with respect to a block, which stores data in at least one of said words, from among the plurality of blocks, stores an address group of the memory device that is placed in correspondence with that block; a write unit that, when an address from the computation device is not in the storage unit on receiving a write instruction from the computation device, allocates any of the plurality of blocks as a block for writing, and writes the data from the computation device to any word in the block for writing; a word state storage unit that stores word information indicating one or more words, to which the data have been written by the write unit, from among words in the block for writing; and a read unit that, upon having read the data from words indicated by the word information when receiving a read instruction from the computation device, deletes the word information.

## Description

This application is based upon and claims the benefit of priority from Japanese patent application No. 2007-334455, filed on December 26, 2007, the disclosure of which is incorporated herein in its entirety by reference.

### Background of the Invention

### 1, Field of the Invention:

The present invention relates to a cache memory control method and a cache memory system that is connected between a main memory and a CPU (Central Processing Unit) or a processor core (hereinbelow referred to as simply "core").

The present invention particularly relates to a cache memory control method and a cache memory system that can prevent the occurrence of access to the main memory at the time of, for example, a register spill or inter-core communication when temporary storing data from a CPU or core.

### 2. Description of the Related Art:

Data processing that employs a cache memory is known. A cache memory is provided between a main memory and a computation device such a CPU. A cache memory stores a portion of the data in the main memory and exchanges data with the computation device.

JP-A-2000-267935 and JP-A-04-048358 disclose a cache memory device, and further, a write-back cache memory device for accessing a main memory to read data on a block basis from the main memory when a cache miss occurs at the time of writing data.

JP-A-2003-30049 discloses a write-back cache memory that is connected to each processor in a multiprocessor system made up of a plurality of processors. This cache memory includes flags for specifying processors that have updated data in cache lines (blocks) in the cache memory.

The cache memory disclosed in JP-A-2003-30049 also accesses the main memory to read data on a block basis from the main memory upon occurrence of a cache miss when writing data.

JP-A-62-269248 describes a write-back buffer control method that uses update flags for indicating whether data in a block in the cache memory has been updated.

In the buffer control method described in JP-A-62-269248, a secondary memory device is accessed and then data is read on a block basis from the secondary memory device in the event of a cache miss at the time of writing data.

On the other hand, in a CPU that includes registers for storing data and that can be connected to a cache memory, the number of registers may become insufficient depending on the program.

In such cases, the CPU executes a register spill. A register spill is a process whereby a CPU first saves in memory data stored in registers. Then, when the registers are emptied, the CPU restores the saved data to the registers from memory.

In Japanese Patent No. 3296027, a compiling method is described in which registers that are dedicated to the register spill are used to eliminate the need for memory access at the time of a register spill and thus achieve higher speeds.

In addition, progress in the degree of integration of LSI has resulted in the increase of multi-core CPUs having a plurality of cores in the CPU. In these CPUs, communication between cores is realized through the use of a shared cache memory.

The compiling method described in Japanese Patent No. 3296027 has the problem in which there is an increase in the amount of hardware due to the addition of the dedicated registers. In addition, because there is necessarily a limit to the number of dedicated registers, access to the main memory (herein below referred to as "memory access") occurs when the stored data temporarily reach a large amount.

As a technique for solving this problem, a system can be considered in which a CPU, which processes register spill, uses a write-back cache memory such as described in JP-A-2000-267935, JP-A-04-48358, JP-A-2003-30049, or JP-A-62-269248 as a place for temporarily saving data.

In such cases, however, various problems occur as described below,

When a cache miss occurs at the time of the data-writing process by a CPU due to a register spill, a write-back cache memory system accesses the main memory to read data on a block basis from the main memory. As a result, memory access occurs and the saving process becomes time consuming.

In addition, even after the data in the cache memory are restored to the registers of the CPU, data in blocks in the cache memory are in a state of having been rewritten due to the register spill. As a result, when the block is replaced, the data in the block are written back to the main memory.

In other words, unnecessary memory access occurs even when the cache memory is temporarily used as the save areas for the register spill.

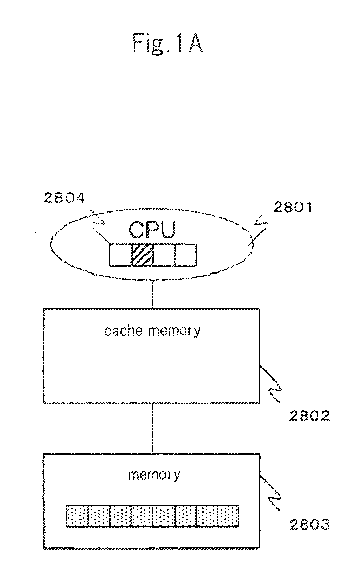

FIGs. 1A-1D are explanatory views for explaining the problem that occurs in the register spill in a write-back cache memory. In FIGs. 1A-1D, the computation system includes CPU 2801, cache memory 2802, and main memory (hereinbelow referred to as simply "memory") 2803. CPU 2801 includes register 2804.

FIG. 1A shows the initial state.

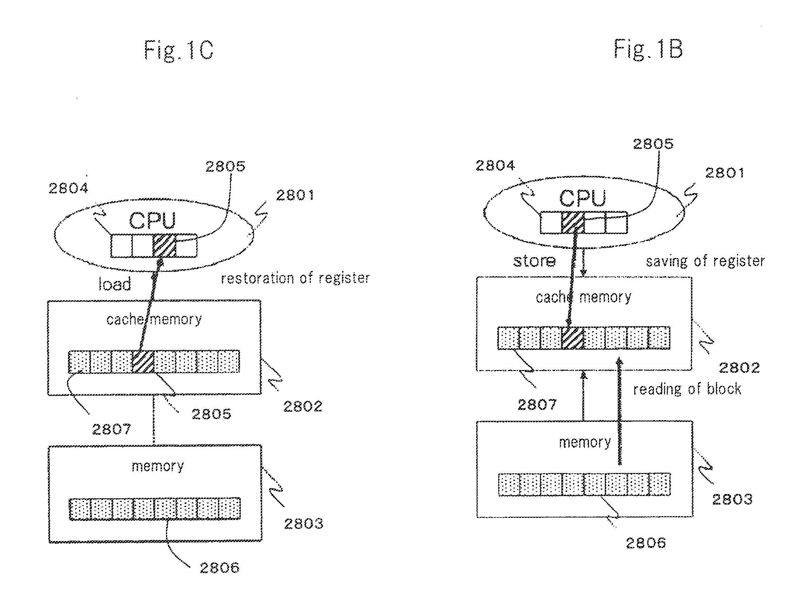

FIG. 1B is a view for explaining the process of the cache memory when a register spill occurs and when a store command is executed to save data 2805 from register 2804 of CPU 2801.

In FIG. 1B, when CPU 2801 attempts to write data 2805 in register 2804 to cache memory 2802, a write miss (cache miss) occurs in cache memory 2802.

As a result, cache memory 2802 reads the data in block 2806, which corresponds to the word designated in the store command, from memory 2803. Cache memory 2802 then writes the data in block 2806 to cache memory 2802 as the data in block 2807.

Data 2805 in the word designated in the store command are then written to the fourth word in block 2807 in cache memory 2802.

FIG. 1C is a view for explaining the process of restoring the saved data to the register. In FIG. 1C, data 2805 in cache memory 2802 are written to register 2804 of CPU 2801 in order to restore saved data 2805 to register 2804.

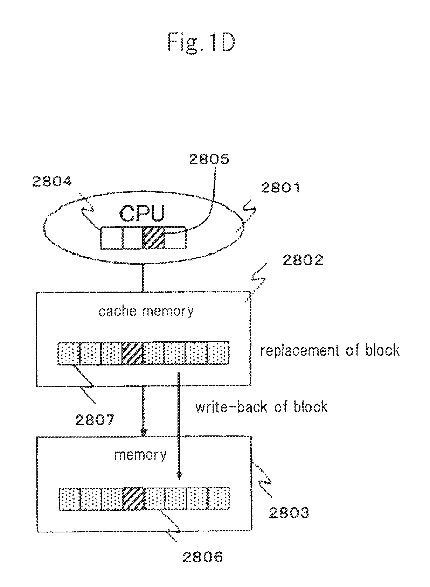

FIG. 1D is a view for explaining write-back. In FIG. 1D, when block 2807 in cache memory 2802 is replaced, the data in block 2807 are written back to block 2806 in memory 2803.

In addition, the problem of the occurrence of unnecessary memory access occurs similarly when data are communicated between the cores of a CPU having multiple cores.

A particular core attempts to use a store command to provide the cache memory with data that is to be provided to another core. When a cache miss occurs in the cache memory at this time, the cache memory accesses memory to read from memory the data in the block that corresponds to the store command, and then stores the data in a block for writing data in the cache memory.

In addition, even after the other core(s) has/have read the data from the block for writing data in the cache memory, the block for writing data is in a dirty state. As a result, the data in this block are written back to memory when this block is replaced, whereby unnecessary memory access occurs.

Thus, even when a CPU or a core uses only high-speed cache memory to temporarily store data, unnecessary memory access occurs to maintain the coherence between the cache memory and memory.

When data from a CPU is temporarily stored in a block in a cache memory, other data in the block, which is read from memory following a cache miss at the time of writing the temporary data, has no relation to the temporary data, and therefore the other data in the block are unnecessary.

In addition, data, which is read from a block in a cache memory due to write-back that occurs after a CPU reads temporarily stored data from that block in the cache memory, need not be written to memory.

### Summary of the Invention:

An exemplary object of the present invention is to provide a cache memory control method and a cache memory system that can solve the above-described problems.

A cache memory system according to an exemplary aspect of the invention is a cache memory system that is connected to a computation device and a memory device, the cache memory system including: a data array that includes a plurality of blocks that are composed of a plurality of words; a storage unit that, with respect to a block, which stores data in at least one of the words, from among the plurality of blocks, stores an address group of the memory device that is placed in correspondence with that block; a write unit that, when an address from the computation device is not in the storage unit on receiving a write instruction from the computation device, allocates any block of the plurality of blocks as a block for writing, and writes the data from the computation device to any word in the block for writing; a word state storage unit that stores word information indicating one or more words, to which the data have been written by the write unit, from among words in the block for writing; and a read unit that, upon having read the data from words indicated by the word information when receiving a read instruction from said computation device, deletes the word information.

A cache memory control method according to an exemplary aspect of the invention is a cache memory control method that is carried out by a cache memory system that includes a data array that includes a plurality of blocks that are composed of a plurality of words, the cache memory system being connected to a computation device and a main memory device, the cache memory control method including: storing, with respect to a block, which stores data in at least one of the words, from among the plurality of blocks, an address group of the shared memory, which has been placed in correspondence with that block, in a storage unit; when an address from the computation device is not in the storage unit on receiving a write instruction from the computation device, allocating any block of the plurality of blocks as a block for writing and writing data from the computation device to any words in the block for writing; storing in a word state storage unit word information indicating one or more words, to which the data have been written, from among words in the block for writing; and when the data have been read from words indicated by the word information on receiving a read instruction from the computation device, deleting the word information.

The above and other objects, features, and advantages of the present invention will become apparent from the following description with reference to the accompanying drawings which illustrate an example of the present invention.

### Brief Description of the Drawings:

FIG. 1A is an explanatory view for explaining the problems that occur in the register spill process in a write-back cache memory;
FIG. 1B is an explanatory view for explaining the problems that occur in the register spill process in a write-back cache memory;
FIG. 1C is an explanatory view for explaining the problems that occur in the register spill process in a write-back cache memory;
FIG. 1D is an explanatory view for explaining the problems that occur in the register spill process in a write-back cache memory;
FIG. 2A shows the configuration of the cache memory of the first exemplary embodiment of the present invention;
FIG. 2B is a block diagram showing the functional blocks of control unit 115;
FIG. 3 shows a bit sequence of the state and other information in cache memory;
FIG. 4 shows the relation between validity/nonvalidity of block data and the bit sequence of the state and other information in cache memory;
FIG. 5 is a flow chart representing the operations of cache memory;
FIG. 6 is a flow chart representing the operations when allocating a new block of cache memory;
FIG. 7A is an explanatory view showing an example of a command for reading all blocks from memory;
FIG. 7B is an explanatory view showing an example of reply when all blocks have been read from memory;
FIG. 7C is an explanatory view showing an example of a command for writing all blocks to memory;
FIG. 7D is an explanatory view showing an example of a command for writing to memory only words for which W(i)=1 in a block;
FIG. 8 is a view for explaining the operations of a cache miss at the time of a store command of cache memory;
FIG. 9 is a view for explaining the operations of a cache hit at the time of a store command of cache memory;
FIG. 10 is a view for explaining the operations of a cache hit at the time of a load command of cache memory;
FIG. 11 is a view for explaining the operations of a cache miss at the time of a load command of cache memory;
FIG. 12 is a view for explaining the operations of a cache miss at the time of a load command of cache memory;
FIG. 13 is a view for explaining the operations at the time of replacing entries of cache memory;
FIG. 14 is a view for explaining the operations of a cache miss at the time of a load command of cache memory;
FIG. 15 is a view for explaining the operations at the time of replacing entries of cache memory;
FIG. 16 is a view for explaining the operations at the time of replacing entries of cache memory;
FIG. 17 is a view for explaining operations at the time of a load-and-invalidate command of cache memory;
FIG. 18A is an explanatory view for explaining the operations of writing to cache memory in accordance with a register spill and reading from cache memory at the time of restoration;
FIG. 18B is an explanatory view for explaining the operations of writing to cache memory in accordance with a register spill and reading from cache memory at the time of restoration;
FIG. 18C is an explanatory view for explaining the operations of writing to cache memory in accordance with a register spill and reading from cache memory at the time of restoration;
FIG. 18D is an explanatory view for explaining the operations of writing to cache memory in accordance with a register spill and reading from cache memory at the time of restoration;
FIG. 18E is an explanatory view for explaining the operations of writing to cache memory in accordance with a register spill and reading from cache memory at the time of restoration;
FIG. 18F is an explanatory view for explaining the operations of writing to cache memory in accordance with a register spill and reading from cache memory at the time of restoration;
FIG. 19 is a block diagram showing the computation system in which the cache memory system of the second exemplary embodiment of the present invention is applied;
FIG. 20A is a block diagram showing cache memory system 1A;
FIG. 20B is a block diagram showing the functions possessed by control unit 1916 as functional units;
FIG. 21 is an explanatory view showing an example of bit sequence 1907 of state and other information;
FIG. 22 is an explanatory view showing the validity/nonvalidity of the i^{th} word according to the values of BV 2002 and W(i) 2003 shown in FIG. 21;
FIG. 23 is a flow chart for explaining the operations of cache control unit 1905;
FIG. 24 is a flow chart for explaining Steps 2208 and 2218 shown in FIG. 23;
FIG. 25 is a flow chart for explaining Step 2207 shown in FIG. 23;
FIG. 26 is a flow chart for explaining Step 2222 shown in FIG. 23;
FIG. 27A is a view for explaining the register spill process in the second exemplary embodiment of the present invention;
FIG. 27B is a view for explaining the register spill process in the second exemplary embodiment of the present invention;
FIG. 27C is a view for explaining the register spill process in the second exemplary embodiment of the present invention;
FIG. 27D is a view for explaining the register spill process in the second exemplary embodiment of the present invention;
FIG. 28A is a view for explaining the inter-core communication process in the second exemplary embodiment of the present invention;
FIG. 28B is a view for explaining the inter-core communication process in the second exemplary embodiment of the present invention;
FIG. 28C is a view for explaining the inter-core communication process in the second exemplary embodiment of the present invention;
FIG. 28D is a view for explaining the inter-core communication process in the second exemplary embodiment of the present invention;
FIG. 28E is a view for explaining the inter-core communication process in the second exemplary embodiment of the present invention; and
FIG. 28F is a view for explaining the inter-core communication process in the second exemplary embodiment of the present invention.

### Description of the Exemplary Embodiments:

Explanation next regards details of exemplary embodiments of the present invention with reference to the accompanying figures.

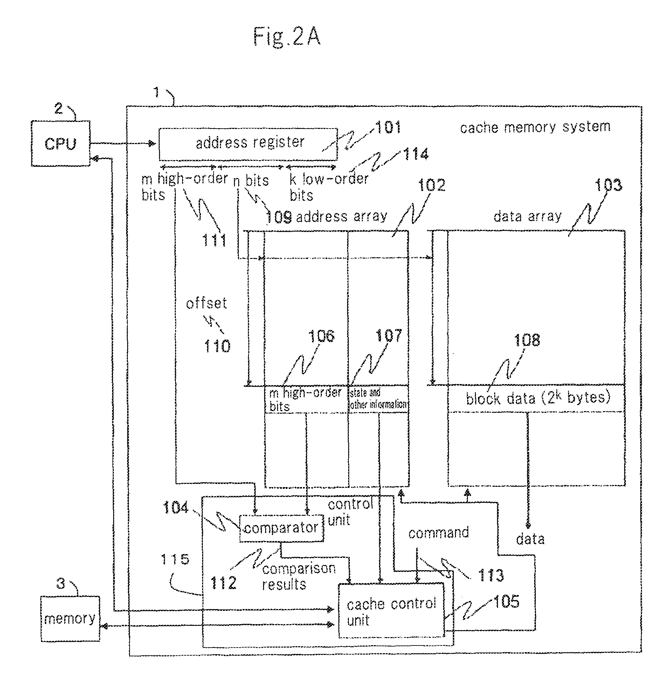

FIG. 2A is a block diagram showing the cache memory system of a first exemplary embodiment of the present invention.

In FIG. 2A, cache memory system 1 is connected to CPU 2 and memory 3. CPU 2 can generally be referred to as a computation device. Memory 3 can generally be referred to as a memory device.

Cache memory system 1 includes: address register 101, address array 102, data array 103, comparator 104, and cache control unit 105. Comparator 104 and cache control unit 105 are contained in control unit 115.

Address register 101 stores addresses requested by CPU 2. The addresses stored in address register 101 are represented by m high-order bits 111, n middle bits 109, and k low-order bits 114.

The data of m high-order bits 111 are provided to comparator 104. The data of the n middle bits 109 are provided to address array 102 and data array 103.

Address array 102 is a memory that holds 2ⁿ entries (herein below referred to as "address entries"). Data array 103 is also memory that holds 2ⁿ entries (herein below referred to as "data entries"). Data array 103 includes a plurality of blocks (data entries) composed of a plurality of words.

Each address entry has a one-to-one correspondence to each data entry based on the data of n middle bits 109.

Each address entry has an offset that corresponds to any value that can be represented by the data of n middle bits 109, As a result, each address entry corresponds to n middle bits 109. The offset is also generally referred to as an index.

Address array 102 is used as an index of data (block data) that are stored on a block basis in data entries of data array 103.

Each address entry in address array 102 includes, for each offset that corresponds to n middle bits 109, m high-order bits 106 of the address and a bit sequence that represents the state and other aspects of block (herein below referred to as the "state and other information bit sequence") 107. The m high-order bits 106 of an address are a portion of the address of block data (block address).

A portion of address array 102, which stores m high-order bits 106 for each offset that corresponds to n middle bits 109, is an example of a storage means.

The storage means stores an address group of memory 3 (the data of m high-order bits 106 and the data of n middle bits 109) that corresponds to data entries in which data are stored in at least one word.

This address group refers a plurality of addresses in which the data of m high-order bits and the data of n middle bits are prescribed and the data of k low-order bits are any values.

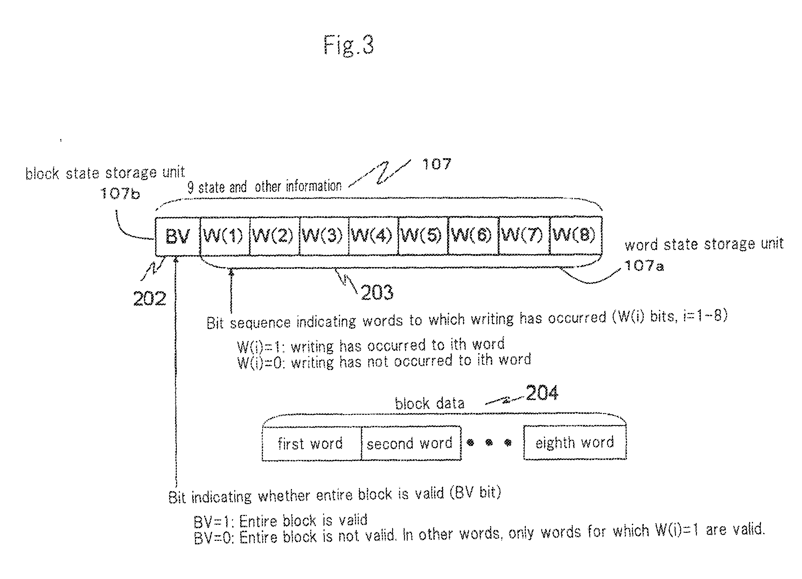

The portion of address array 102 that stores state and other information bit sequence 107 includes word state storage unit 107a and block state storage unit 107b (see FIG. 3).

Word state storage unit 107a can be generally referred to as word state storage means.

Word state storage unit 107a stores word state information (W(1)-W(8)) for specifying words, in which data from CPU 2 have been written, in association with the addresses that have been placed in correspondence with these words.

An item in W(1)-W(8) having a value of "1" is word information indicating a word in which data have been written in cache control unit 105.

Block state storage unit 107b can be generally referred to as block state storage means.

Block state storage unit 107b stores, for each address group that corresponds to a block of data array 103, block state information (BV) that indicates whether data, which is read from memory 3, have been stored in words, in which data from CPU 2 have not been written, in the words within the block.

State and other information bit sequence 107 will be explained in detail later.

Address array 102, upon receiving data of n middle bits 109 as offset 110, provides the data of m high-order bits 106 and the data of state and other information bit sequence 107 in the address entry that corresponds to offset 110.

The data of m high-order bits 106 is provided to comparator 104. The data of state and other information bit sequence 107 is provided to cache control unit 105.

One data entry of data array 103 stores 2^{k} bytes of block data (hereinbelow referred to as simply "block") 108,

Each data entry has a one-to-one correspondence to each address entry, and the blocks in each data entry therefore have a one-to-one correspondence to each address entry.

Comparator 104 compares the data of m high-order bits 106 from address array 102 and the data of m high-order bits 111 from address register 101.

Matching of the data of m high-order bits 106 with the data of m high-order bits 111 means that blocks that contain data designated by addresses in address register 101 are in the cache memory (more specifically, address array 102 and data array 103).

Cache control unit 105 controls the cache memory (more specifically, address array 102 and data array 103) based on comparison results 112 from comparator 104, command 113 from CPU 2, and state and other information bit sequence 107 from address array 102.

Command 113 is an inclusive term for a load command (such as a load request), a store command (such as store or a store request), and a load-and-invalidate command (such as load&inv or a load-and-invalidate request).

Control unit 115 can be generally referred to as control means.

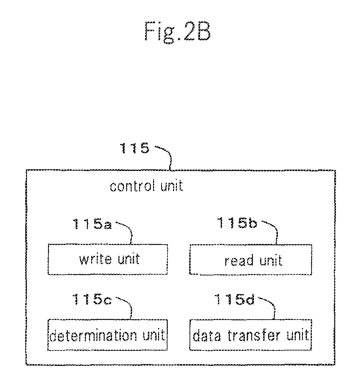

Control unit 115 controls the operations of cache memory system 1, FIG. 2B is a block diagram showing the functions possessed by control unit 115 as functional units.

In FIG. 2B, control unit 115 includes: write unit 115a, read unit 115b, determination unit 115c, and data transfer unit 115d.

Write unit 115a can be generally referred to as write means.

Write unit 115a accepts a store command from CPU 2.

Write unit 115a allocates any of a plurality of blocks in data array 103 as the block for writing data when an address indicated in the store command is not in address array 102 (more specifically, the portion that stores m high-order bits 106 for each offset that corresponds to n middle bits 109).

Without reading data of the block, which corresponds to the address from CPU 2, from memory 3, write unit 115a places any word in the block for writing data in correspondence with the address from CPU 2 and writes data from CPU 2 into that word.

Read unit 115b can generally be referred to as read means.

Read unit 115b accepts a load command from CPU 2. The load command can be generally referred to as a second read command.

When word state storage unit 107a stores word state information (W(i)=1) that corresponds to an address indicated in the load command, or when block state storage unit 107b stores block state information (BV=1) that corresponds to an address indicated in the load command, read unit 115b reads data from the word in data array 103 that is specified by this address.

When a cache miss occurs at the time of reading data according to a load command, read unit 115b reads from memory 3 the data in the block (hereinbelow referred to as "corresponding block") that corresponds to the address indicated in the load command.

Read unit 115b next refers to word state storage unit 107a to specify one word or a plurality of words, to which data are not written, from among the words in corresponding blocks in data array 103.

Read unit 115b writes, from among the data in the words of the block that is read from memory 3, the data, which corresponds to the one word or the plurality of specified words, into only the one word or plurality of words that were specified

Read unit 115b stores block state information (BV=1) in block state storage unit 107b. The block state information (BV=1) indicates that data, which is read from memory 3, are stored into the one word or plurality of words, in which data from CPU 2 have not been written, of the words in the block.

Read unit 115b further accepts load-and-invalidate commands from CPU 2. A load-and-invalidate command can generally be referred to as a first read command.

Upon accepting a load-and-invalidate command, read unit 115b carries out the process carried out when accepting a load command and then sets word state information W(i) that corresponds to the word in which data were read to "0." Since the word information is W(i)=1, setting W(i) to "0" means that the word information is deleted.

Determination unit 115c can generally be referred to as determination means.

Upon accepting a load command or upon accepting a load-and-invalidate command, determination unit 115c refers to word state storage unit 107a and block state storage unit 107b to determine whether a cache hit or cache miss has occurred.

Data transfer unit 115d can generally be referred to as data transfer means.

Data transfer unit 115d writes only the data of the one word or plurality of specified words in the block in data array 103 to the corresponding block in memory 3.

For example, data transfer unit 115d refers to word state storage unit 107a, specifies one word or a plurality of words to which data have been written in the block for writing, and performs write-back of data in this one word or plurality of words, which have been specified, to corresponding blocks in memory 3.

In the present exemplary embodiment, data transfer unit 115d refers to word state storage unit 107a and block state storage unit 107b when the address of memory 3 that corresponds to a block in data array 103 is switched, and when data from CPU 2 have been written to all of the words in that block or when data in that block have once been read from memory 3, performs write-back of the entire data in that block to the corresponding block in memory 3. Data transfer unit 115d otherwise specifies one word or a plurality of words to which data have been written by CPU 2 from among the words in that block and performs write-back of only data in the one word or plurality of specified words to the corresponding block in memory 3.

In the following explanation: the addresses stored in address register 101 are of 64 bits; k=6, i.e., the size of blocks is 64 bytes; n =10, i.e., both the number of address entries of address array 102; and the number of data entries of data array 103 are 1024; and m=48. The 64-byte blocks are composed of eight words. One word is eight bytes.

Although a direct-mapping cache memory is presented in the present exemplary embodiment, the cache memory of the present exemplary embodiment can also be applied in a set-associative cache memory. In such a case, address array 102, data array 103, and comparator 104 are required for each of the number of ways in the set-associative cache memory.

Explanation next regards the operations of cache memory system 1 shown in FIGs. 2A and 2B.

When cache memory system 1 has been accessed, address register 101 stores the address. This address may be a logical address or a physical address.

In the present exemplary embodiment, explanation will be presented for a case in which this address is a physical address that has been converted from a virtual address by some type of address conversion means.

Because the size of blocks is 64 bytes, the data of 6 (k) low-order bits 114 of address register 101 are the address of a word in a block of data array 103.

Using the data of 10 (n) middle bits 109 as the offset 110 of address array 102, data in an address entry of address array 102 (data of 48 (m) high-order bits 106 and data of state and other information bit sequence 107) are read.

Comparator 104 compares the data of 48 (m) high-order bits 106 that have been read and the data of 48 (m) high-order bits 111 in address register 101 and determines whether the block, which contains the data designated by the address in address register 101, is already in the cache memory

Cache control unit 105 accepts comparison results 112 of comparator 104, command 113, and state and other information bit sequence 107.

Cache control unit 105 determines the operations of cache memory based on comparison results 112, command 113, and bit sequence 107.

Details regarding the operations of cache control unit 105 will be explained later.

FIG. 3 is an explanatory view showing an example of state and other information bit sequence 107 that is stored in address array 102.

State and other information bit sequence 107 is made up from 9 bits. More specifically, state and other information bit sequence 107 is composed of BV 202 of one bit and W(i) (i=1-8) 203 of eight bits. W(i) (i=1-8) 203 is composed of W(1)-W(8) of one bit.

W(1)-W(8) 203 corresponds to the address of each word in block data in data array 103, i.e., each word. The block data are composed of eight words. As a result, W(1) corresponds to the first word of block data 204. W(2) corresponds to the second word. W(3) corresponds to the third word. W(4) corresponds to the fourth word. W(5) corresponds to the fifth word. W(6) corresponds to the sixth word. W(7) corresponds to the seventh word. W(8) corresponds to the eighth word.

A value "0" of W(i) 203 indicates that data have not been written to the i^{th} word by CPU 2.

BV 202 indicates whether an entire block in data array 103, which corresponds to an address entry that contains BV202, is valid or not.

More specifically, a value of "1" of BV 202 means that data that have been read from memory 3 are stored in a word to which data have not been written by CPU 2 (W(i) 203 is "0"), and means that the entire corresponding block is valid, In other words, a value "1" of BV 202 means that, even when the value of W(i) 203, which indicates the state of the i^{th} word, is "0," i.e., even when W(i) 203 indicates that CPU 2 has not written data to the i^{th} word, data which had been read from memory 3 have been written to the i^{th} word and valid data are therefore stored in the i^{th} word.

In addition, a value "0" of BV 202 means that only the data of the word, for which the value of W(i) 203 is "1", are valid and that the data of a word, for which the value of W(i) 203 is "0", are invalid.

In addition, the value of W(i) 203, which corresponds to word in which data have been read by a load-and-invalidate command, is set to "0."

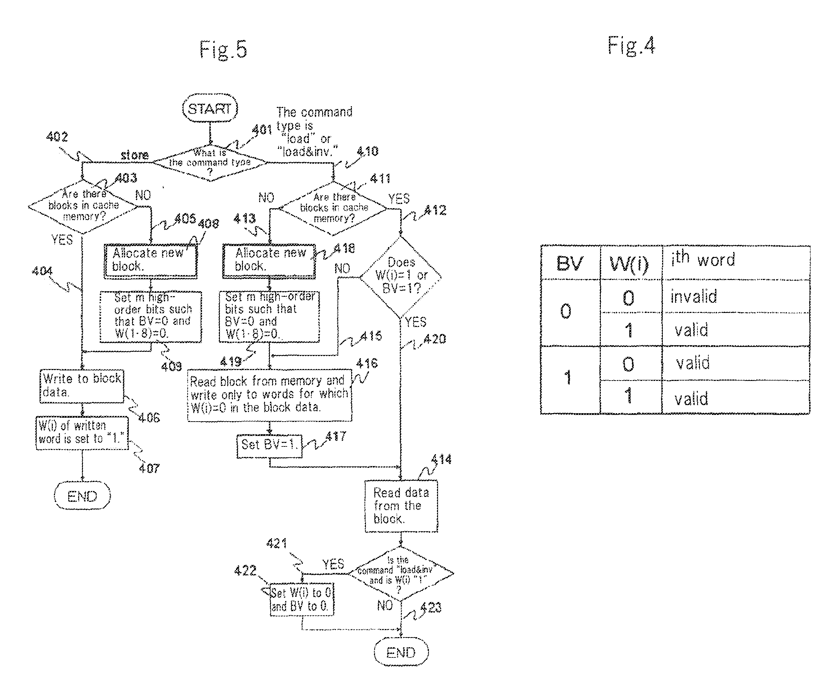

FIG. 4 is an explanatory view showing whether the ¡^{th} word is valid or not according to BV 202 and the value of W(i) 203 shown in FIG. 3.

Explanation next regards the details of the operations of the first exemplary embodiment while referring to FIGs. 2A, 2B, and FIG. 3.

FIG. 5 is a flow chart for explaining the operations of cache control unit 105.

When address register 101 stores an address that is used to access the cache memory, the data of 10 (n) middle bits 109 of this address are used as offset 110 of address array 102 and data array 103. In this way, the data of 48 (m) high-order bits 106 and the data of state and other information bit sequence 107 in the address entry of address array 102 are read, and the data entry of data array 103 is thus accessed.

Comparator 104 compares the data of 48 (m) high-order bits 106 that have been read and 48 (m) high-order bits 111 in address register 101 to determine whether a block, which contains data designated by the address in address register 101, is already in the cache memory.

Cache control unit 105 accepts comparison results 112 of comparator 104, the data of state and other information bit sequence 107, and command 113.

Command 113 is provided from CPU 2. In addition, cache control unit 105 accepts data of 6 (k) low-order bits. Cache control unit 105 further accepts data for writing that are indicated in a store command from CPU 2 when the access is for writing of data.

In Step 401, cache control unit 105 determines whether command 113 is a store command, a load command, or a load-and-invalidate command.

First, when command 113 is a store command in Step 402, cache control unit 105 executes Step 403.

In Step 403, cache control unit 105 determines whether the entry, which stores the block that was accessed, is already in the cache memory (address array 102 and data array 103) based on comparison results 112 of comparator 104.

When comparison results 112 indicate matching, cache control unit 105 determines in Step 404 that the accessed block is in the cache memory.

On the other hand, when comparison results 112 do not indicate matching, cache control unit 105 determines in Step 405 that the accessed block is not in the cache memory.

When it is determined that the accessed block is in the cache memory in Step 404, cache control unit 105 specifies the word in block data 108 based on the data of 6 (k) low-order bits in Step 406, writes the data for writing to this word, and then makes the value of W(i) 203 correspond to the word, to which data were written, "1" in Step 407

When the accessed block is not in the cache memory in Step 405, cache control unit 105 performs a process of allocating a new block as the block for writing the data in Step 408.

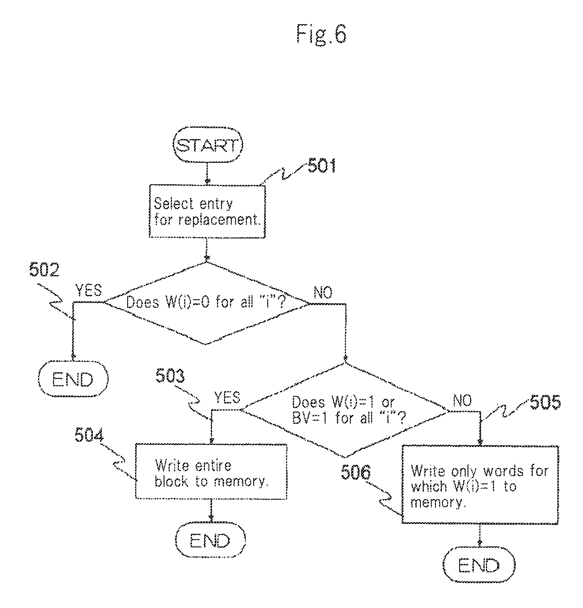

Details regarding the process of allocating a new block (Step 408) are described later using FIG. 6.

After step 408, cache control unit 105 in Step 409 writes the data of 48 (m) high-order bits 111 of address register 101 to 48 (m) high-order bits 106 of an entry of address array 102 corresponding to the newly allocated block of data array 103 and zero-clears (BV=0, W(1-8)=0) state and other information bit sequence 107 of the similarly corresponding entry of address array 102 to implement initialization.

After Step 409, cache control unit 105 specifies the word in the newly allocated block of data array 103 based on the data of the 6 (k) low-order bits and writes the data for writing to this word in Step 406, and then sets the value of W(i) 203, which corresponds to the word to which data have been written, to "1" in Step 407.

On the other hand, when command 113 is a load command or a load-and-invalidate command in Step 410, cache control unit 105 executes Step 411.

In Step 411, cache control unit 105 determines, based on comparison results 112 of comparator 104, whether the entry that stores the accessed block is already in the cache memory.

When comparison results 112 indicate matching, cache control unit 105 determines that the accessed block is in the cache memory in Step 412.

On the other hand, when comparison results 112 do not indicate matching, cache control unit 105 determines that the accessed block is not in the cache memory in Step 413.

When in Step 412 the accessed block is in the cache memory, and moreover, when the value of W(i) corresponding to the accessed word is "1" or if BV 202 of the accessed block is "1" in Step 420, cache control unit 105 reads the data from the word, which is specified by the 6 (k) low-order bits, in block data 108 that have been accessed in data array 103 in Step 414.

When command 113 is a load-and-invalidate command, and moreover, when W(i) corresponds to the accessed word is "1" in Step 421, cache control unit 105 then sets the W(i) to "0" and BV to "0" in Step 422.

On the other hand, if command 113 is not a load-and-invalidate command, or if W(i) corresponding to the accessed word is not "1" (Step 423), cache control unit 105 does nothing.

On the other hand, when the accessed block is in the cache memory in Step 412 and moreover, when the value W(i) corresponding to the accessed word is "0" and BV 202 of the accessed block is "0" in Step 415, cache control unit 105 in Step 416 reads the data of the block from memory 3 and writes the data, which have been read, to only those words whose W(i) is equal to 0 of the words in block data 108 of that entry in data array 103.

Cache control unit 105 next makes BV 202 in the entry of address array 102, which corresponds to that block, "1" in Step 417.

Next, in Step 414, cache control unit 105 reads data from the accessed word in data array 103. Cache control unit 105 then takes no action because W(i) corresponding to the accessed words is "0" (Step 423).

When the accessed block is not in the cache memory in Step 413, cache control unit 105 carries out a process of allocating a new block in Step 418.

Details regarding the process of allocating a new block (Step 418) are described later using FIG. 6.

Next, cache control unit 105 writes the data of 48 (m) high-order bits 111 of address register 101 to 48 (m) high-order bits 106 of the entry of address array 102 that corresponds to the newly allocated block in Step 419 and zero-clears (BV=0 and W(1-8)=0) state and other information bit sequence 107 of the similarly corresponding entry of address array 102 to realize initialization.

Cache control unit 105 next reads the data of the block from memory 103 and writes the data, which have been read, to only the words whose W(i)=0 of the words in block data 108 of the entry of data array 103 that corresponds to the block in Step 416. In this case, state and other information bit sequence 107 has been zero-cleared in Step 419 and data is therefore written to all of block data 108.

Cache control unit next sets BV 202 in the corresponding entry of address array 102 to "1" in Step 417.

Cache control unit 105 then reads data from the accessed word in data array 103 in Step 414.

Cache control unit 105 next takes no action because W(i) that corresponds to the accessed word is "0" (Step 423).

Explanation next regards Steps 408 and 418 shown in FIG. 5 with reference to FIG. 6.

In Step 501, cache control unit 105 first selects an entry (block) which will be replaced in order to allocate a new entry.

In the present exemplary embodiment, a direct-mapping cache memory is used. As a result, an entry, which will be replaced in order to allocate a new block, is uniquely determined based on the accessed address.

If a set-associative cache memory is used, there will be a plurality of entries that are the object of replacement and that are determined from the address, and one entry of these entries, which will be replaced, can be determined from, for example, access history.

Cache control unit 105 next determines whether data from CPU 2 have been written to the block of the selected entry.

If W(i) 203 from among all words of the selected entry is "0" in Step 502, then data from CPU 2 have not been written to this block. In this case, cache control unit 105 can use the entry as is without performing write-back.

If in Step 503 W(i) 203 from among all words of the selected entry are "1" or if BV 202 = 1, this block is entirely rewritten by CPU 2 or the entire block is valid.

In this case, cache control unit 105 performs write-back of the data of this block to memory 3 in Step 504.

If in Step 505 W(i) 203 of a portion of the words of the selected entry is "1" and BV 202 = 0, only words whose W(i) 203 is "1" have been rewritten. In this case, cache control unit 105 performs write-back to memory 3 of only data of words whose W(i) 203 is "1" in Step 506. Cache control unit 105 further does not write data of words whose W(i) 203 is "0" to memory 3.

The operations relating to writing of data that are carried out by comparator 104 and cache control unit 105 are performed by write unit 115a.

The operations relating to reading of data that are carried out by comparator 104 and cache control unit 105 are performed by read unit 115b.

The operations relating to the determination of a cache hit or a cache miss that are carried out by comparator 104 and cache control unit 105 are performed by determination unit 115c.

The operations relating to data transfer between data array 103 and memory 3 that are carried out by comparator 104 and cache control unit 105 are performed by data transfer unit 115d.

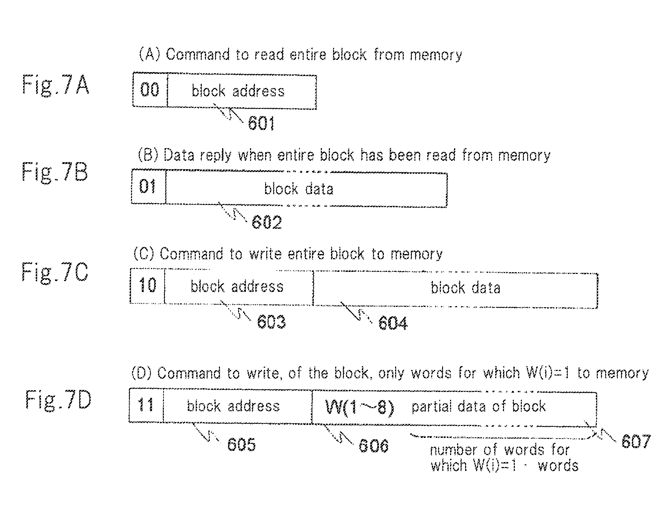

FIGs. 7A-7D are explanatory views for explaining both commands that are sent to memory 3 by cache memory system 1 (more specifically, cache control unit 105) and replies to these commands that are transmitted from memory 3 to cache memory system 1 (more specifically, cache control unit 105).

FIGs. 7A and 7B are explanatory views showing an example of a command to read an entire block and its reply.

In the present exemplary embodiment, an address is 64 bits and the size of a block is 64 bytes. As a result, memory 3 reads a block designated by block address 601 (58 bits) of the command and sends block data 602 (64 bytes) in the format of the data reply shown in FIG. 7B to cache control unit 105.

FIG. 7C is an explanatory view showing an example of a command whereby cache memory system 1 (more specifically, cache control unit 105) writes an entire block to memory 3.

These commands are made up from block address 603 (58 bits) and block data 604 (64 bytes).

FIG. 7D is an example of a command for causing writing of only the data of words whose W(i) 203 is "1" among the words in block data 604 from cache memory system 1 to memory 3.

This command includes block address 605 (58 bits), W(1-8) 606 (8 bits), and the portion of block data 607 composed of data of words for which W(i) 203 is "1" (8 bytes-54 bytes).

The length of this command varies depending on the number of words whose W(i) 203 is "1."

Operations such as memory access and state and other information bit sequence in the present exemplary embodiment are next explained using FIGs, 8-17 taking as an example a block in the cache.

FIG, 8 is an explanatory view for explaining the operations when a cache miss occurs when CPU 2 executes a store command.
When a cache miss occurs in the writing of one word, the block that includes this word is newly allocated to cache memory system 1 (BV=0, W=00000000), write data 703 are written to the fourth word of block data 704 of data array 103 in accordance with the address at the time of writing, and W(4) of state and other information bit sequence 705, which corresponds to the word into which data were written, is set to "1" (BV=0, W=0001 0000).

Although the replacement of a block that accompanies the allocation of a new block may initiate memory access, access to memory that accompanies writing itself does not occur.

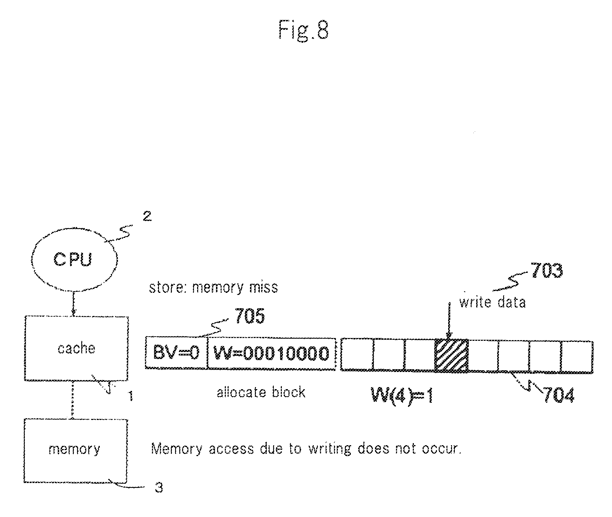

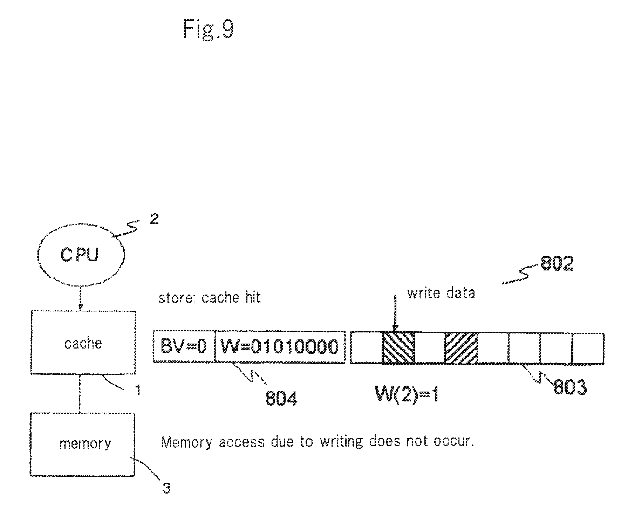

FIG. 9 is an explanatory view for explaining the operations when CPU 2 executes a command to store data to the second word of the same block as the block shown in FIG. 8 and a cache hit occurs.

When the writing of one word results in a cache hit, data 802 are written to the second word of block data 803 of data array 102 and W(2) of state, and other information bit sequence 804 becomes "1" (BV=0, W=01 01 0000). In this case as well, access of memory 3 due to writing does not occur.

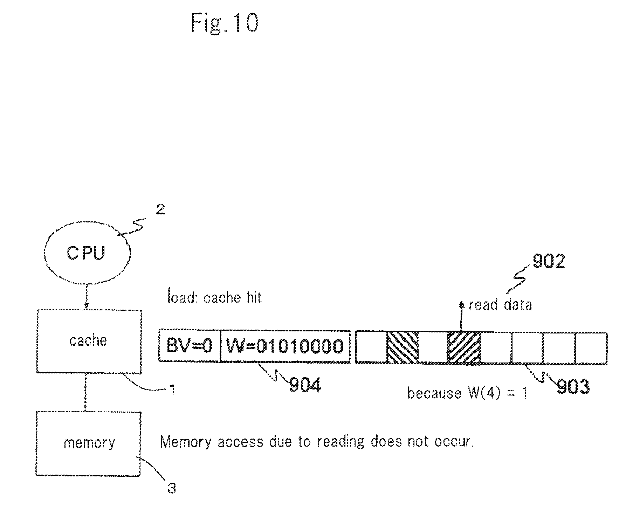

FIG. 10 is an explanatory view for explaining the operations when CPU 2 executes a load command to the fourth word of the same block as the block shown in FIG. 9 and a cache hit occurs.

When reading of one word results in a cache hit, the data is read from the fourth word of block data 903 of data array 102 and is returned to CPU 2 as read data 902.

In this case, state and other information bit sequence 904 is not updated (BV=0 and W=01010000).

However, when the cache memory is set-associative, the portion that is access history can be updated for replacement. In addition, access to memory 3 that accompanies reading does not occur.

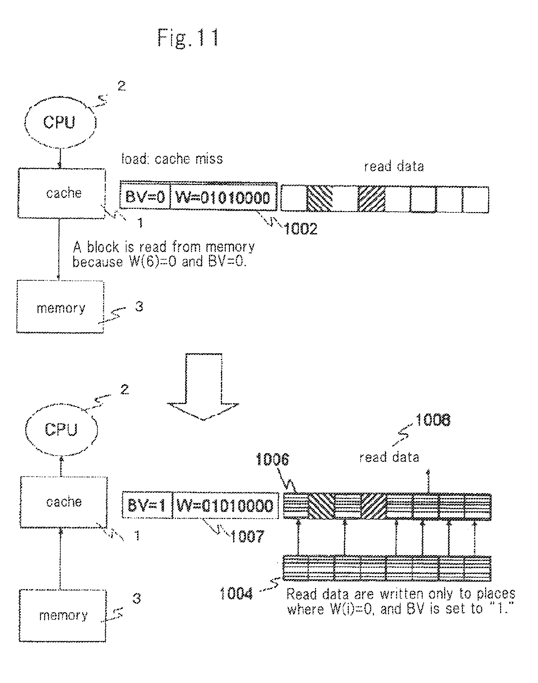

FIG. 11 shows the operations when CPU 2 executes a load command to the sixth word of the same block as the block shown in FIG. 10 and a cache miss occurs.

Since state and other information bit sequence 1002 is W(6)=0 and BV=0, the reading of one word results in a cache miss, and cache control unit 105 uses the command shown in FIG. 7A to read data in the same block as the block shown in FIG. 10 from memory 3.

Then, when block data 1004 that has been read from memory 3 is returned in the format of the data reply indicated in FIG. 7B to cache memory system 1 (cache control unit 105), only data of those words, whose W(i) is equal to 0 (the data of the first, third, and fifth to eighth words) of block data 1004 are written to block 1006, and BV 202 of bit sequence 1007 of state and other information becomes "1" (BV=1 and W=01010000).

The data of the sixth word are then returned to CPU 2 as read data 1008.

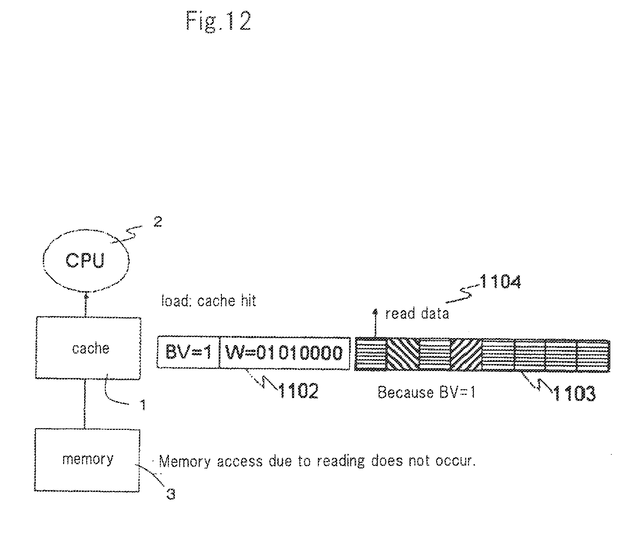

FIG. 12 shows the operations when CPU 2 executes a load command to the first word of the same block as the block shown in FIG. 11 and a cache hit occurs.

BV 202 of state and other information bit sequence 1102 is "1" and the reading of one word therefore results in a cache hit, and data in the first word of block data 1103 are returned to CPU 2 as read data 1104.

In this case, state and other information bit sequence 1102 is not updated (BV=1 and W=01 01 0000).

However, when the cache memory is set-associative, there is a possibility of updating of the access history portion for the purpose of replacement. In addition, memory access caused by reading does not occur.

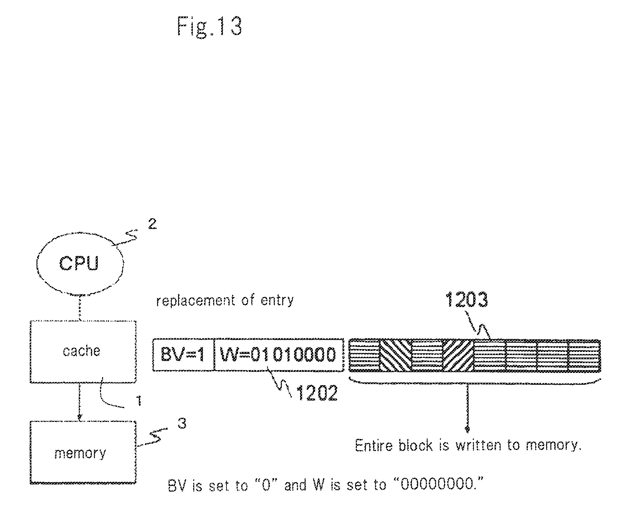

FIG. 13 shows the operations when an entry of the same block as the block shown in FIG. 12 is the object of replacement.

Data are written by CPU 2 to the second word and fourth word, and W(2) and W(4) of state and other information bit sequence 1202 are "1" (W=01010000), but BV 202 is "1." As a result, the command shown in FIG. 7C is used to write all of block data 1203 to memory 3. State and other information bit sequence 1202 becomes then initialized (BV=0 and W=00000000).

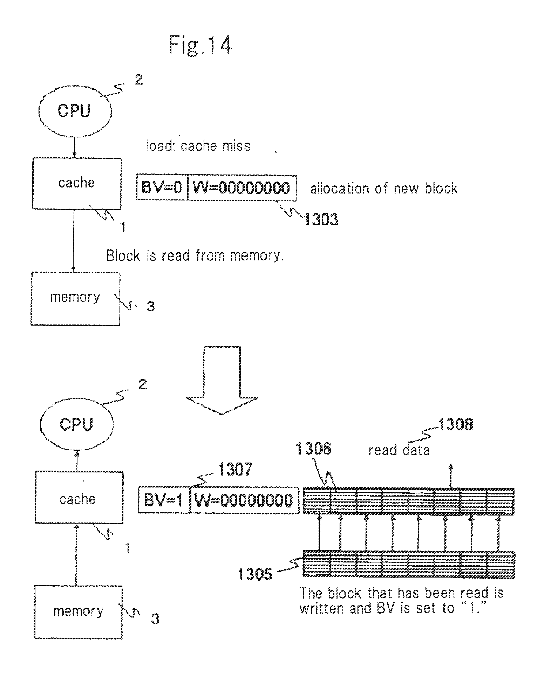

FIG. 14 shows the operations when CPU 2 executes a load command and a cache miss occurs.

The block including the word in which data should be read is not in cache memory 1, and a new block is therefore allocated and state and other information bit sequence 1303 becomes initialized (BV=0, W=00000000).

Data in the block including the word in which data should be read are next read from memory 3 using the command shown in FIG. 7A,

Block data 1305 that is read from memory 3 is returned to cache memory 1 in the format of the data reply of FIG. 7B and written to block 1306.

BV of state and other information bit sequence 1307 next becomes "1" (BV=1. W=00000000). Read data 1308 is then returned to CPU 2.

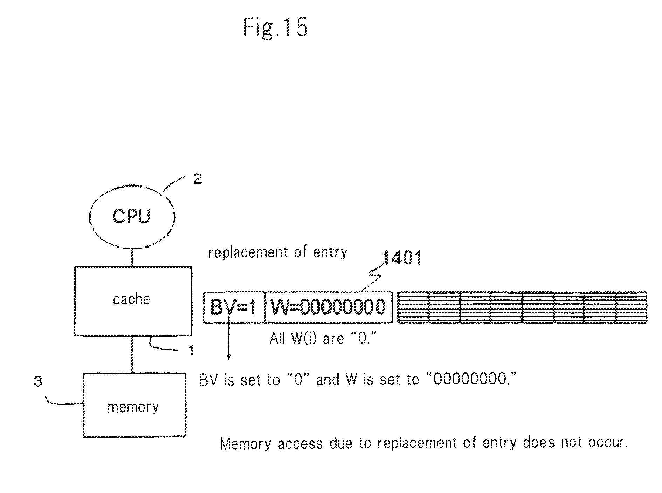

FIG. 15 shows the operations when an entry of the same block as the block shown in FIG. 14 becomes the object of replacement.

All W(i) of bit sequence 1401 of state and other information of this block are "0" (W=00000000). As a result, a process is carried only to make BV "0" (BV=0, W=00000000). Memory access resulting from the replacement of the entry does not occur.

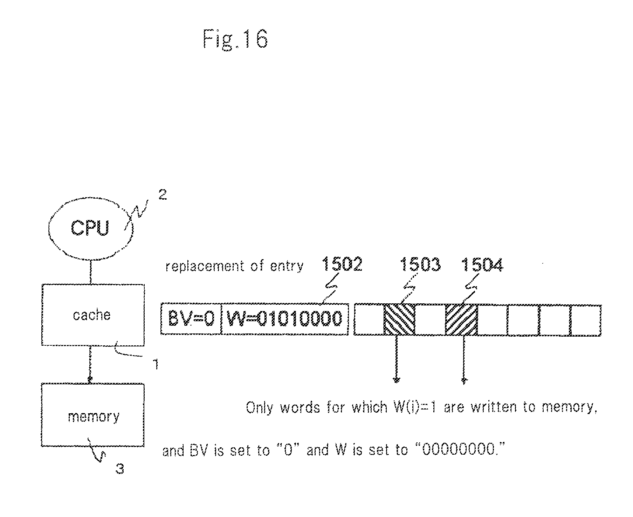

FIG. 16 shows the operations when the entry of a particular block becomes the object of replacement.

When data are written from CPU 2 to the second word and fourth word, W(2) and W(4) of bit sequence 1502 of state and other information becomes "1" (W=01010000), and BV 202 becomes "0," whereby the command shown in FIG. 7D is used to write only data 1503 and 1504 of the second word and the fourth word to memory 3.

State and other information bit sequence 1501 is next initialized (BV=0 and W=00000000).

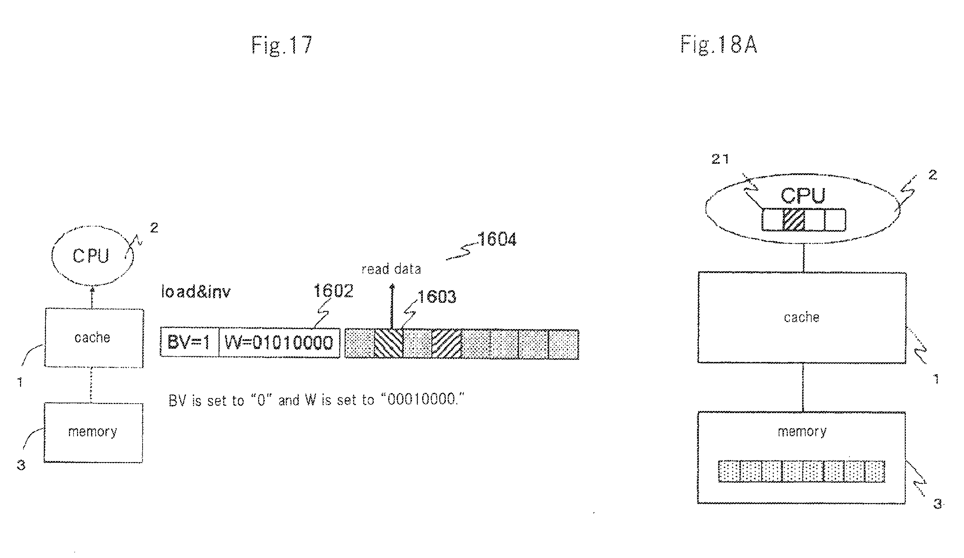

FIG. 17 shows the operations when CPU 2 executes a load-and-invalidate command to the second word of a particular block.

Data are written by CPU 2 to the second word and fourth word of this block. W(2) and W(4) of state and other information bit sequence 1602 are "1" and BV 202 is "1" (BV=1 and W=01010000).

Data 1603 of the second word is read from the cache memory, and returned to CPU 2 as read data 1604.

Because W(2) of the second word that is read is "1," W(2) is next set to "0" and BV is set to "0" (BV=0 and W=00010000).

FIGs. 18A-18F are explanatory views for explaining the operations of writing data to the cache memory according to a register spill and reading data from the cache memory at the time of restoration in the first exemplary embodiment.

FIG. 18A is an explanatory view showing the initial state.

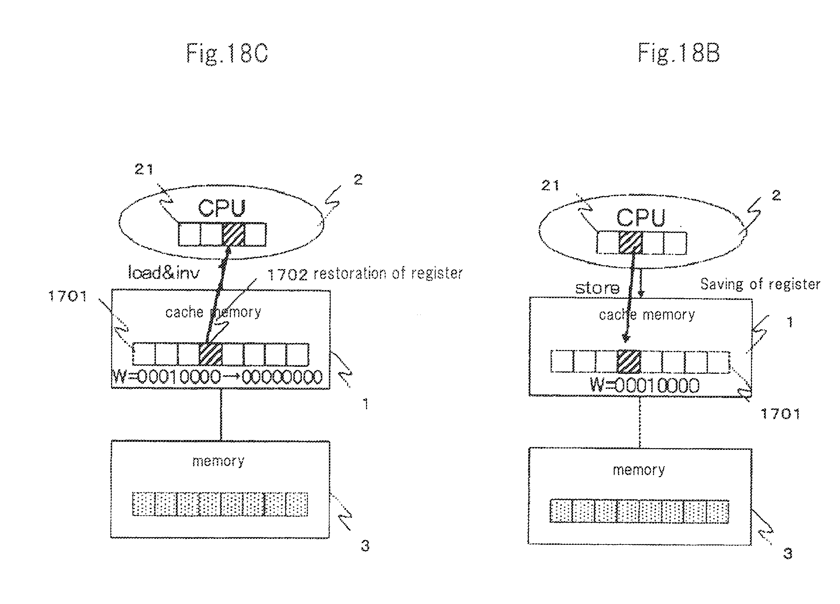

FIG. 18B is an explanatory view showing the operations when a register spill occurs and a store command is executed to save data from register 21 of CPU 2.

In FIG. 18B, a cache miss occurs at the time of writing data in cache memory 1, block 1701, which corresponds to the word indicated in the store command, is allocated to cache memory 1, and data in the word shown in the store command are written to the fourth word of block 1701. W(4) is next changed to "1" (W=00010000).

FIG. 18C is an explanatory view showing the operations when a load-and-invalidate command is executed.

In FIG. 18C, data 1702 in cache memory 1 is read to register 21 of CPU 2 by a load-and-invalidate command in order to restore data 1702 in register 21. W(4) is then changed to "0" (W=00000000).

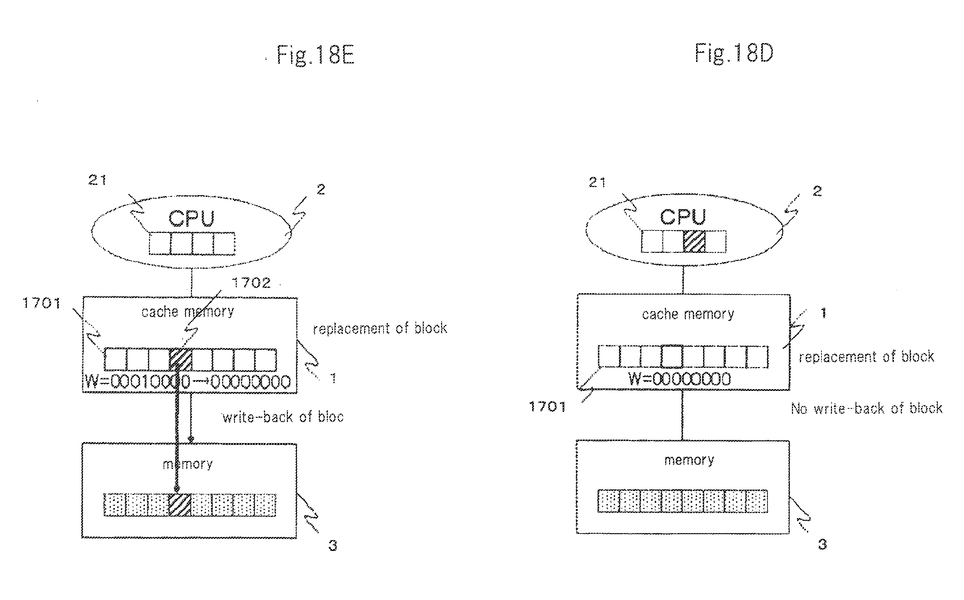

FIG. 18D is an explanatory view showing the operations when block 1701 in cache memory 1 is replaced. Because W=00000000 in block 1701, write-back of the data in block 1701 to memory 3 does not occur.

Thus, in the first exemplary embodiment, unnecessary memory access described in FIG. 1 does not occur.

In this case, before block 1701 is replaced, CPU 2 uses a load-and-invalidate command to read data 1702 that have been written.

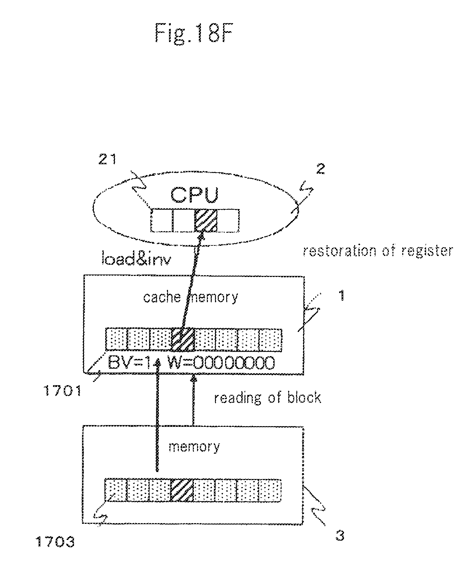

If block 1701 is replaced before CPU 2 uses the load-and-invalidate command to read data 1702, write-back to memory 3 occurs as shown in FIG. 18E. Then, when CPU 2 uses a load-and-invalidate command to read data 1702, the data in block 1703 is read from memory 3 (see FIG. 18F).

Thus, even if the block that saves the data in register 21 of CPU 2 is discarded, a memory access occurs but the correct data is restored in register 21.

According to the present exemplary embodiment, when an address from CPU 2 is not in address array 102 (the portion that stores m high-order bits 106 for each offset that corresponds to n middle bits 109) at the time of writing data from CPU 2, control unit 115 (write unit 115a) allocates any of the plurality of blocks in data array 103 as the block for writing of data. Control unit 115 (write unit 115a) then places any word in this block for writing data in correspondence with the address from the CPU 2 and writes the data from CPU 2 to this word.

Word state storage unit 107a stores word information (W(i)=1) that indicates one or more words to which data have been written from CPU 2.

When data is read from a word indicated by word information (W(i)=1) at the time of reading data by CPU 2, control unit 115 (read unit 115b) deletes the word information (changes the value of W(i) from "1" to "0").

As a result, a computation device such as a CPU can avoid unnecessary memory access that occurs at the time of writing temporary data to a cache memory due to, for example, a register spill.

More specifically, the reading of the block data from memory can be avoided at the time of a write miss. In addition, when replacing a block that includes a word to which data from a CPU have been written, write-back of the data in that word to memory can be avoided.

In addition, when temporary data in the register of a CPU is to be stored in a cache memory, a greater mitigation of limits relating to the volume of temporary data can be achieved than providing, for example, a special register in the CPU.

Still further, when temporary data in the register of a CPU is stored in a cache memory, the stored temporary data does not become context and does not need to be saved at the time of switching processes.

In cache memory system 1 according the present exemplary embodiment, action and effects that are equivalent to those described hereinabove can be realized despite the omission of address register 101, block state storage unit 107b, determination unit 115c, and data transfer unit 115d.

In the present exemplary embodiment, when data is read from a word indicated by word information at the time of reading data in accordance with a load-and-invalidate command (first read command), control unit 115 (read unit 115b) deletes the word information. In addition, when data is read from a word indicated by word information at the time of reading data in accordance with a load command (second read command), control unit 115 (read unit 115b) does not delete the word information, that is, retains the word information.

In this case, a computation device such as a CPU can delete or maintain word information as necessary at the time of reading data.

Details regarding the second exemplary embodiment according to the present invention are next described with reference to the accompanying figures.

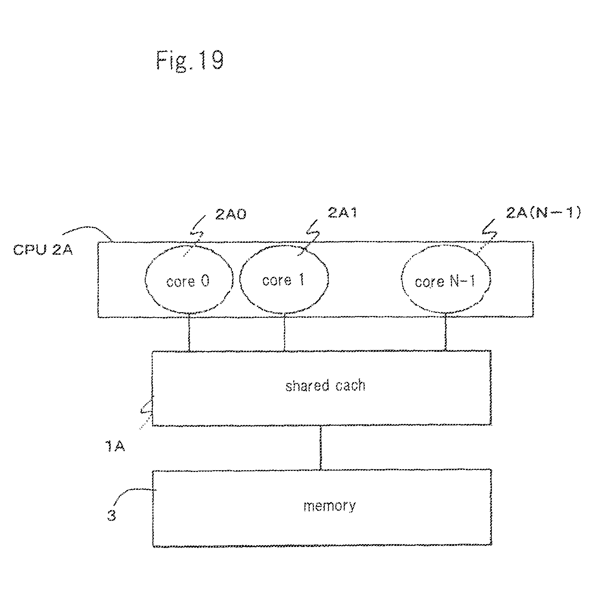

FIG. 19 is a block diagram showing the computation system in which the cache memory system of the second exemplary embodiment according to the present invention is applied.

As shown in FIG. 19, cache memory system (shared cache) 1A according to the present exemplary embodiment is connected to CPU 2A having a plurality of cores (processors) 2A0-2A(N-1) and to memory 3. The plurality of cores 2A0-2A(N-1) uses cache memory system 1A as a shared cache memory.

In the present exemplary embodiment, a unique core number is set in advance to each of cores 2A0-2A(N-1). More specifically, core number "0" is set to core 2A0, core number "1" is set to core 2A1, and core number "N-1" is set to core 2A(N-1).

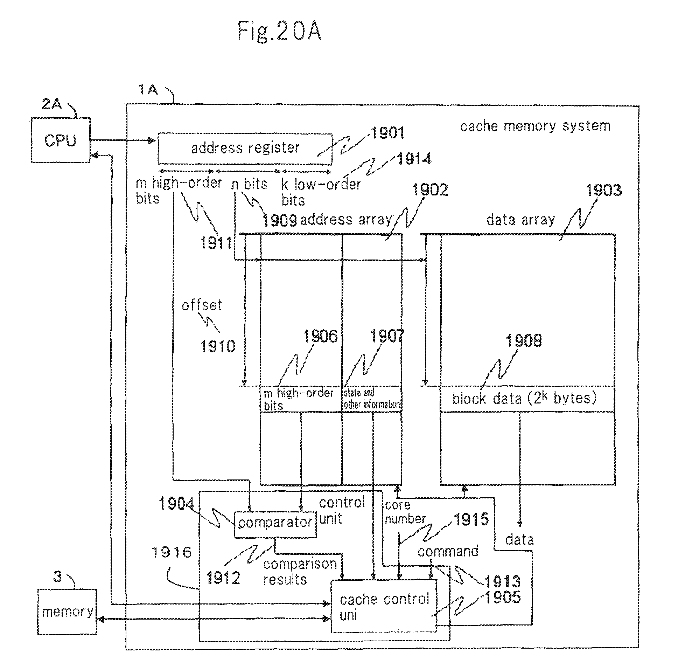

FIG. 20A is a block diagram showing cache memory system 1A.

The differences between cache memory system 1A shown in FIG. 20A and cache memory system 1 shown in FIG. 2A are: core number 1905 that is added to the input information that is provided the cache control unit, and the configuration of the state and other information bit sequence, and the control of the state and other information bit sequence.

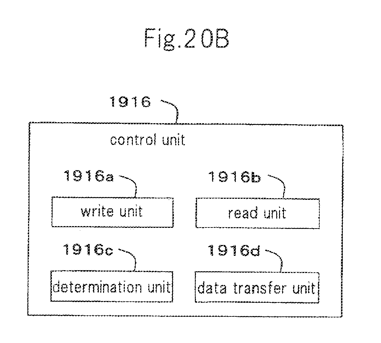

FIG. 20B is a block diagram showing the functions possessed by control unit 1916 as functional units.

In FIG. 20B, control unit 1916 includes write unit 1916a, read unit 1916b, determination unit 1916c, and data transfer unit 1916d.

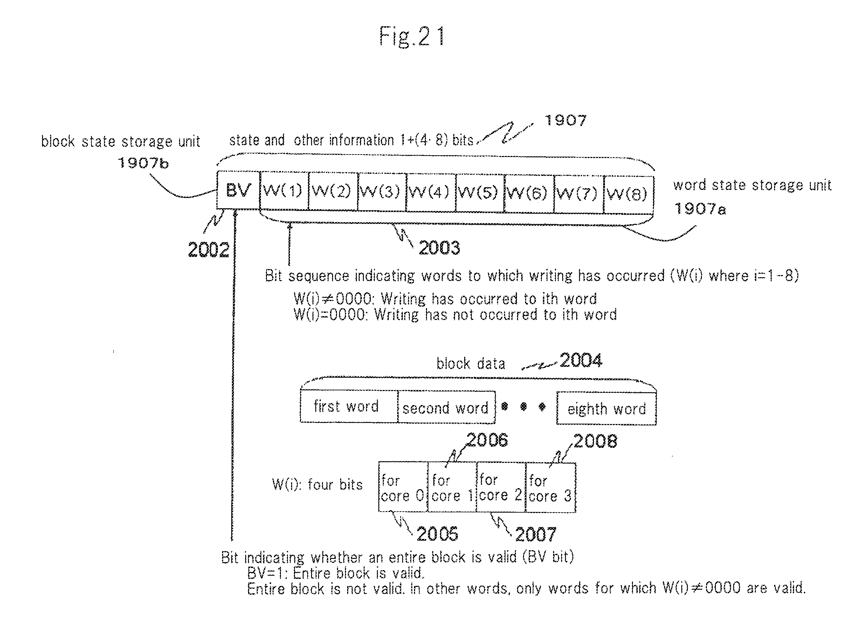

FIG. 21 is an explanatory view showing an example of state and other information bit sequence 1907. FIG. 21 shows the configuration of state and other information bit sequence 1907 for a case in which the number of cores is four.

Although the following explanation regards a case in which four cores are connected to one shared cache memory (N=4 in FIG. 19) in the second exemplary embodiment, the present exemplary embodiment can be similarly applied in cases in which the number of cores is other than four.

State and other information bit sequence 1907 is made up of 33 bits. More specifically, state and other information bit sequence 1907 is composed of BV 2002 of one bit and W(1)-W(8) 2003 of 32 bits.

BV 2002 indicates whether the entire block is valid.

W(1)-W(8) 2003 are each four-bit bit sequences and correspond to the address of each word in block in data array 1903, i.e., correspond to each word. Block are composed of eight words. As a result, W(1) corresponds to the first word in block 1908. W(2) corresponds to the second word, W(3) corresponds to the third word, W(4) corresponds to the fourth word, W(5) corresponds to the fifth word, W(6) corresponds to the sixth word, W(7) corresponds to the seventh word, and W(8) corresponds to the eighth word.

Each of the four bits of W(i) 2003 corresponds to the four cores. The four bits of W(i) 2003 are made up from bit 2005 for core 2A0, bit 2006 for core 2A1_{,} bit 2007 for core 2A2, and bit 2008 for core 2A3.

W(i)≠0000 means that the data from any of the cores has been written to the i^{th} word, whereby valid data is stored in the i^{th} word in block 2004. On the other hand, when W(i) 2003 is "0000," data from any of the cores has not been written to the i^{th} word.

A value "1" of BV 2002 means that the entire block is valid. In other words, when BV 2002 is "1," W(i) 2003 of the i^{th} word is "0000," i.e., even when data have not been written to the i^{th} word, data from memory 3 are stored in the ¡^{th} word and valid data are therefore stored in the i^{th} word.

A value "0" of BV 2002 means that words other than the i^{th} word whose W(i) 2003 is "0000" are valid and that a word whose W(i) 2003 is 0000 is invalid.

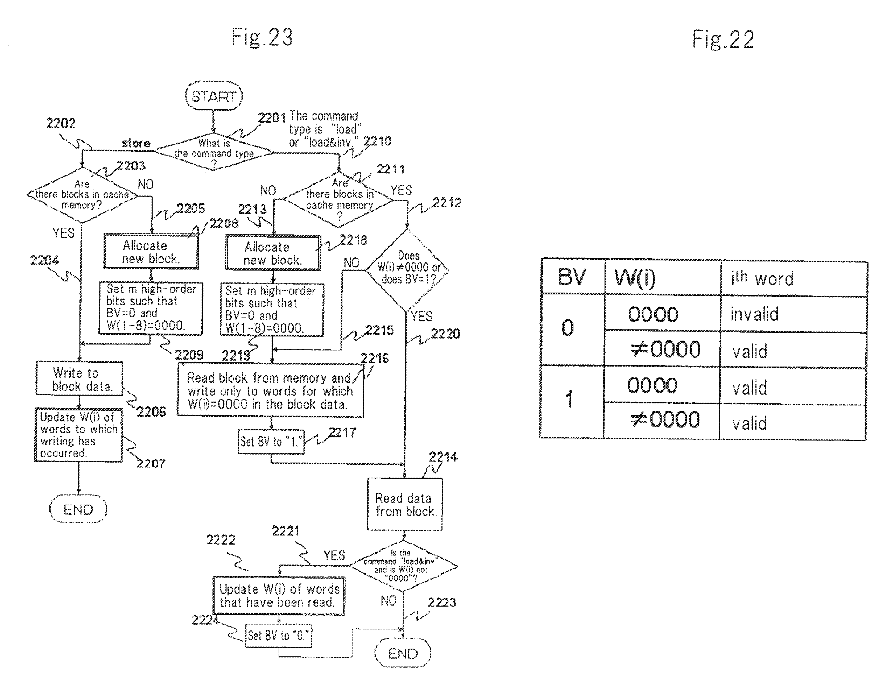

FIG. 22 is an explanatory view showing the validity/nonvalidity of an i^{th} word according to the values of BV 2002 and W(i) 2003 shown in FIG. 21.

The operations of the second exemplary embodiment are next described in detail while referring to FIGs. 20 and 21.

FIG. 23 is a flow chart for explaining the operations of cache control unit 1905.

When address register 1901 stores an address that was accessed in cache memory, the data of 10 (n) middle bits 1909 of this address are then used as offset 1910 of address array 1902 and data array 1903. In this way, the data of 48 (m) high-order bits 1906 and the data of state and other information bit sequence 1907 in the address entry of address array 1902 are read, and the data entry of data array 1903 is thus accessed.

Comparator 1904 compares the data of 48 (m) high-order bits 1906 that have been read and the data of 48 (m) high-order bits 1911 in address register 1901 to determine whether a block, which includes data designated by the address in address register 1901, is already in cache memory.

Cache control unit 1905 accepts comparison results 1912 of comparator 1904, the data of state and other information bit sequence 1907, command 1913, and core number 1915.

Command 1913 and core number 1915 are provided from the core of cores 2A0-2A3 in CPU 2A that accesses (to write or to read) cache memory system 1A. Cache control unit 1905 also accepts the data of 6 (k) low-order bits. When the access is for writing, cache control unit 1905 accepts data for writing indicated in a store command from the core that carries out writing.

In Step 2201, cache control unit 1905 determines whether command 1913 is a store command, a load command, or a load-and-invalidate command. Cache control unit 1905 first executes Step 2203 if command 1913 is a store command in Step 2202.

In Step 2203, cache control unit 1905 determines whether the entry that stores the accessed block is already in cache memory (address array 1902 and data array 1903) based on comparison results 1912 of comparator 1904.

If comparison results 1912 indicate matching, cache control unit 1905 determines in Step 2204 that the accessed block is in cache memory.

On the other hand, if comparison results 1912 do not indicate matching, cache control unit 1905 determines in Step 2205 that the accessed block is not in cache memory.

If the accessed block is in cache memory in Step 2204, cache control unit 1905 specifies the word in block data 1908 based on the data of 6 (k) low-order bits and writes the data for writing to that word in Step 2206, and then updates the value of W(i) 2003 for the word, to which data have been written, in Step 2207.

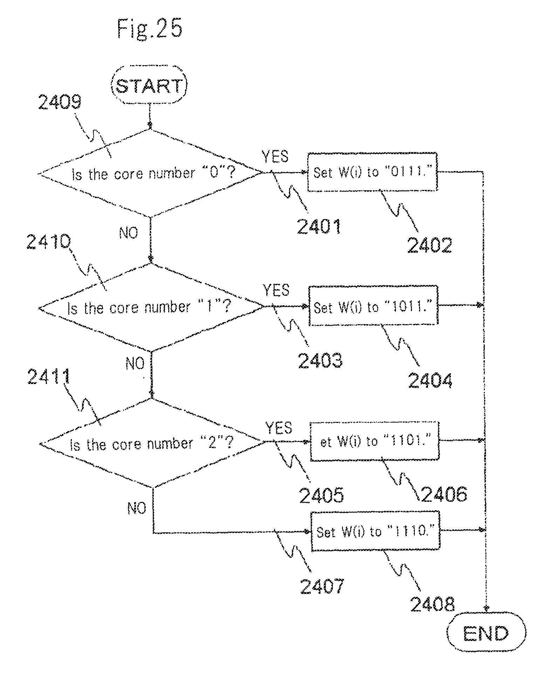

Updating of W(i) 2003 of the word to which data that has been written (Step 2207) will later be explained in detail using FIG. 25.

If the accessed block is not in cache memory in Step 2205, cache control unit 1905 carries out a process for allocating a new block as the block for writing in Step 2208.

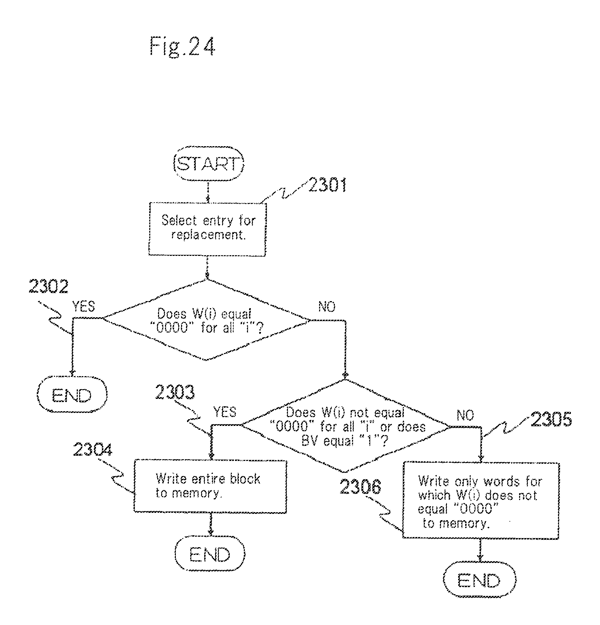

The process of allocating a new block (Step 2208) will later be explained in detail using FIG. 24.

After Step 2208, cache control unit 1905 writes the data of 48 (m) high-order bits 1911 of address register 1901 to 48 (m) high-order bits 1906 of the entry of address array 1902 that corresponds to the newly allocated block in Step 2209 and zero-clears (BV=O and W(1-8)=0000) to thus initialize state and other information bit sequence 1907 of the similarly corresponding entry of address array 1902.

After Step 2209, cache control unit 1905 specifies the word in the newly allocated block based on the data of 6 (k) low-order bits and writes the write data for writing to this word in Step 2206, and then updates the values of W(i) 2003 that correspond to the word to which data have been written in Step 2207.

Updating of W(i) 2003 of the word to which data has been written (Step 2207) will be later explained in detail using FIG. 25.

Next, if command 1913 is a load command or a load-and-invalidate command in Step 2210, cache control unit 1905 executes Step 2211.

In Step 2211, cache control unit 1905 determines whether the entry that stores the accessed block is already in cache memory based on comparison results 1912 of comparator 1904.

When comparison results 1912 indicate matching, cache control unit 1905 determines in Step 2212 that the accessed block is in cache memory.

On the other hand, if comparison results 1912 do not indicate matching, cache control unit 1905 determines in Step 2213 that the accessed block is not in cache memory.

If the accessed block is in cache memory in Step 2212, and moreover, if the value of W(i) corresponding to the accessed word is other than "0000" or BV 2002 of the accessed block is "1" in Step 2220, cache control unit 1905 in Step 2214 reads the data from the word of data array 1903 and that is specified by 6 (k) low-order bits, in block data 1908 that have been accessed.

If command 1913 is a load-and-invalidate command, and moreover, if W(i) 2003 corresponding to the word that was read is other than "0000" in Step 2221, cache control unit 1905 then updates W(i) 2003 that corresponds to the read word in Step 2222 and sets BV=O in Step 2224.

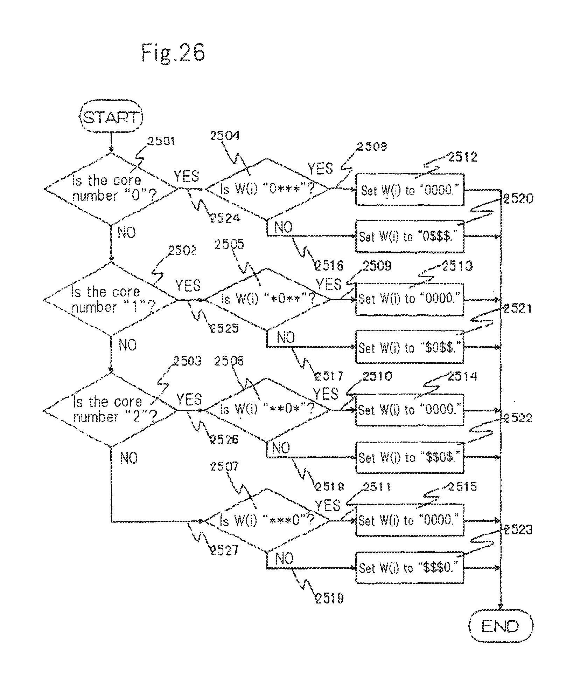

Updating of W(i) 2003 of the word from which data was read (Step 2222) will be later described in detail using FIG. 26.

If command 1913 is not a load-and-invalidate command, or if W(i) 2003, which corresponds to the word from which data was read, is "0000" (Step 2223), cache control unit 1905 does nothing.

On the other hand, if the accessed block is in cache memory in Step 2212, and further, if the value of W(i) that corresponds to the accessed word is "0000," and moreover, if BV 2002 of the accessed block is "0" in Step 2215, cache control unit 1905 in Step 2216 reads the data of that block from memory 3 and writes the data, which have been read, to only words whose W(i)=0000 of the words in block data 1908 of that entry in data array 1903.

Cache control unit 1905 next sets BV 2002 in the entry of address array 1902, which corresponds to that block, to "1" in Step 2217.

Cache control unit 1905 then reads data from the word that was accessed in data array 1903 in Step 2214.

If command 1913 is a load-and-invalidate command, and moreover, if W(i) 2003, which corresponds to the word from which data was read, is other than "0000" in Step 2221, cache control unit 1905 then updates W(i) 2003 that corresponds to the word from which data was read in Step 2222 and sets BV to "0" in Step 2224.

The updating of W(i) 2003 of the word from which data was read (Step 2222) will later be explained in detail using FIG. 26.

If command 1913 is not a load-and-invalidate command, or if W(i) 2003 that corresponds to the word from which data was read is "0000" (Step 2223), cache control unit 1905 does nothing.

In this case, W(i) that corresponds to words that were accessed is "0000" in Step 2215, Step 2223 is selected and cache control unit 1905 does nothing.

On the other hand, if the accessed block is not in cache memory in Step 2213, cache control unit 1905 carries out a process to allocate a new block in Step 2218.

The process of allocating a new block (Step 2218) will later be explained in detail using FIG. 24.

In Step 2219, cache control unit 1905 next writes the data of 48 (m) high-order bits 1911 of address register 1901 to 48 (m) high-order bits 1906 of the entry of address array 1902 that corresponds to the newly allocated block and zero-clears (BV=0 and W(1-8)=0000) to initialize state and other information bit sequence 1907 of the entry of address array 1902.

In Step 2216, cache control unit 1905 next reads the data of this block from memory 3 and writes the data, which have been read, to only those words whose W(i)=0000 of the words in block data 1908 of the entry of data array 1903 that corresponds this block.

In this case, data is written to all of block data 1908 because state and other information bit sequence 1907 was zero-cleared in Step 2219.

Cache control unit 1905 next sets BV 2002 in the entry that corresponds to address array 1902 to "1" in Step 2217.

Cache control unit 1905 next reads data from the accessed word in data array 1903 in Step 2214.

If in Step 2221 command 1913 is a load-and-invalidate command, and moreover, if W(i) 2003 that corresponds to a word from which data was read is other than "0000," cache control unit 1905 then updates W(i) 2003 corresponding to words from which data was read in Step 2222 and sets BV=0 in Step 2224.

The updating of W(i) 2003 of a word from which data was read (Step 2222) will later be explained in detail using FIG. 26.

command 1913 is not a load-and-invalidate command, or if W(i) 2003 of words from which data was read is "0000" (Step 2223), cache control unit 1905 does nothing.

In this case, because all W(i) were set to "0000" in Step 2219, Step 2223 is selected and cache control unit 1905 does nothing.

Steps 2208 and 2218 shown in FIG. 23 are next described using FIG. 24.

First, in Step 2301, cache control unit 1905 selects an entry (block) which will be replaced in order to allocate a new entry.

In the present exemplary embodiment, a direct mapping cache memory is used. As a result, an entry, which will be replaced in order to allocate a new block, is uniquely determined based on the accessed address.

If a set-associative cache memory is used, there will be a plurality of entries that are the object of replacement and that are determined from the address, and one entry of these entries, which will be replaced, can be determined from, for example, access history.

Cache control unit 1905 next determines whether data from any cores have been written to the block of the selected entry.

If W(i) 2003 of all of the words of the selected entry is "0000" in Step 2302, data from any core have not been written to this block. In this case, cache control unit 1905 can use the entry as is without performing write-back.

If W(i) 2003 of all words of the selected entry is other than "0000" or if BV 2002 is "1" in Step 2303, this block is entirely rewritten or the entire block is valid.

In this case, cache control unit 1905 performs write-back of the data of this block to memory 3 in Step 2304.

If W(i) 2003 of a portion of the words of the selected entry is other than "0000" and if BV 2002 is "0" in Step 2305, only words whose W(i) 2003 is other than "0000" are rewritten.

In this case, cache control unit 1905 performs write-back to memory 3 of only data of words whose W(i) 2003 is other than "0000" in Step 2306. The data of words whose W(i) 2003 are "0" is not written to memory 3.

Operations relating to the writing of data performed by comparator 1904 and cache control unit 1905 are carried out by write unit 1916a.

Operations relating to the reading of data performed by comparator 1904 and cache control unit 1905 are carried out by read unit 1916b.

Operations relating to the determination of a cache hit or a cache miss carried out by comparator 1904 and cache control unit 1905 are carried out by determination unit 1916c.

Operations relating to data transfer between data array 1903 and memory 3 carried out by comparator 1904 and cache control unit 1905 are carried out by data transfer unit 1916d.

Step 2207 shown in FIG. 23 is next explained using FIG. 25.

Cache control unit 1905 first specifies the core that performed writing of data based on core number 1915 in Steps 2409-2411. Core number 1915 is provided from the core when the core provides a store command as output.

Cache control unit 1905 next sets the bit value of W(i) 2003 for the core that carried out writing of data to "0" and the bit value for other cores to "1" in Steps 2402, 2404, 2406, and 2408.

The following explanation follows the flow chart of FIG. 25.
Cache control unit 1905 sets W(i) to "0111" in Step 2402 when the core number is "0" in Step 2401.

Cache control unit 1905 sets W(i) to "1011" in Step 2404 when the core number is "1" in Step 2403.

Cache control unit 1905 sets W(i) to "1101" in Step 2406 when the core number is "2" in Step 2405.

Cache control unit 1905 sets W(i) to "1110" in Step 2408 when the core number is "3" in Step 2407.

In W(i) 2003, the position of "0" in the four bits indicates the core that carried out writing of data.

Step 2222 shown in FIG. 23 is next explained using FIG. 26.

In FIG. 26, "*" used in the bits of W(i) indicates "don't care," and "$" indicates the same value as the preceding value.

Cache control unit 1905 first specifies the core that carried out a load-and-invalidate command based on core number 1915 in Steps 2501-2503. The core number is provided from the core when that core provides the load-and-invalidate command as output.

Cache control unit 1905 then investigates whether, of W(i) 2003 that correspond to words from which data was read, the bit, which corresponds to the core that executed the load-and-invalidate command, is "0" or "1" in Steps 2504-2507.

If the result of investigation is "0" (Steps 2508-2511), cache control unit 1905 sets W(i) 2003, which corresponds to the words from which data was read, to "0000" in Step 2512-2515 in order to indicate that the same core as the core that wrote data to these word executed the load-and-invalidate command.

If the result of investigation is "1" (Steps 2516-2519), cache control unit 1905 sets, when from among W(i) 2003 that corresponds to word from which data was read, the bit, which corresponds to the core that executed the load-and-invalidate command, to "0" in order to indicate that data is written to the word from a core that is different from the core that executed the load-and-invalidate command in Steps 2520-2523.

Explanation next follows the flow chart of FIG. 26.

When the core number is "0" in Step 2524 and, when from among the bits of W(i) 2003 that correspond to the word from which data has been read, the bit corresponding to core number "0" is "0" in Step 2508, cache control unit 1905 sets this W(i) 2003 to "0000" in Step 2512.

When the core number is "0" in Step 2524 and, when from among the bits of W(i) 2003 that correspond to the word from which data that has been read, the bit corresponding to core number "0" is "1" in Step 2516, cache control unit 1905 sets, from among the bits of this W(i) 2003, only the bit corresponding to core number "0" to "0" in Step 2520.

When the core number is "1" in Step 2525 and, when from among the bits of W(i) 2003 that correspond to the word from which data has been read, bits that correspond to core number "1" are "0" in Step 2509, cache control unit 1905 sets this W(i) 2003 to "0000" in Step 2513.

When the core number is "1" in Step 2525 and, when from among the bits of W(i) 2003 that correspond to the word from which data has been read, the bit corresponding to core number "1" is "1" in Step 2517, cache control unit 1905 sets, from among the bits of W(i) 2003, only the bit corresponding to core number "1" to "0" in Step 2521.

When the core number is "2" in Step 2526 and, of the bits of W(i) 2003 that correspond to word from which data has been read, the bit corresponding to core number "2" is "0" in Step 2510, Cache control unit 1905 sets this W(i) 2003 to "0000" in Step 2514.

When the core number is "2" in Step 2526 and, when from among the bits of W(i) 2003 that correspond to the word from which data has been read, the bit that corresponds to core number "2" is "1" in Step 2518, cache control unit 1905 sets, from among the bits of W(i) 2003, only the bit that corresponds to core number "2" to "0" in Step 2522.

When the core number is "3" in Step 2527 and, when from among the bits of W(i) 2003 that correspond to the word from which data has been read, the bit that corresponds to core number "3" is "0" in Step 2511, cache control unit 1905 sets this W(i) 2003 to "0000" in Step 2515.

When the core number is "3" in Step 2527 and, when from among the bits of W(i) 2003 that correspond to the word from which data has been read, the bit that corresponds to core number "3" is "1" in Step 2519, cache control unit 1905 sets, from among the bits of W(i) 2003, only the bit that corresponds to core number "3" to "0" in Step 2523.

As in a register spill, when temporary data are saved from a register in a particular core to cache memory system 1A and the temporary data are then read from the same core to be restored to the register, W(i) becomes "0000" through the execution of a load-and-invalidate command.

On the other hand, when a particular core writes data to cache memory system 1 A and another core reads that data from cache memory system 1 A as in inter-core communication, "1" of bit of the particular core, which read the data, in W(i) is rewritten to "0" by executing a load-and-invalidate command. When a load-and-invalidate command is executed from all cores other than the core that wrote data, "W(i) becomes "0000."

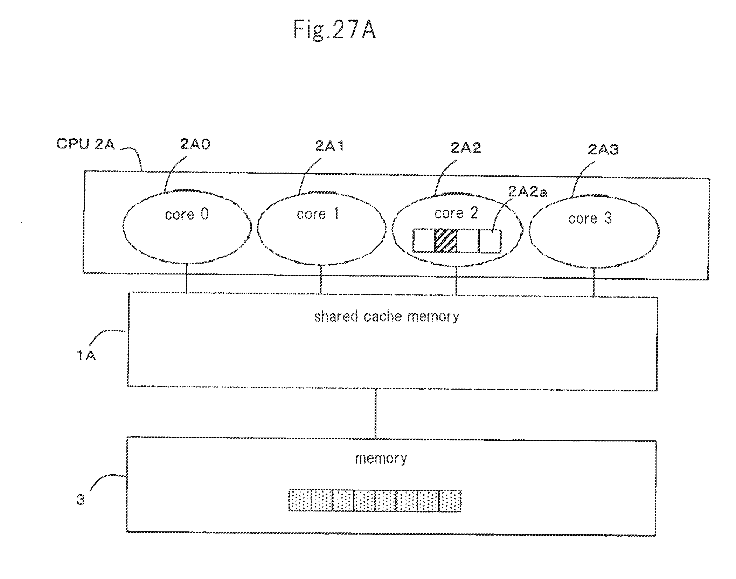

FIGs. 27A-27D are explanatory views for explaining the operations in the second exemplary embodiment when CPU 2A that has four cores 2A0-2A3 writes to cache memory 1A due to a register spill and reads from cache memory 1A at the time of restoration. In FiGs. 27A-27D, elements identical to elements shown in FIG. 19 are given the same reference numerals.

FIG. 27A is an explanatory view showing the initial state. Core 2A2 includes register 2A2a.

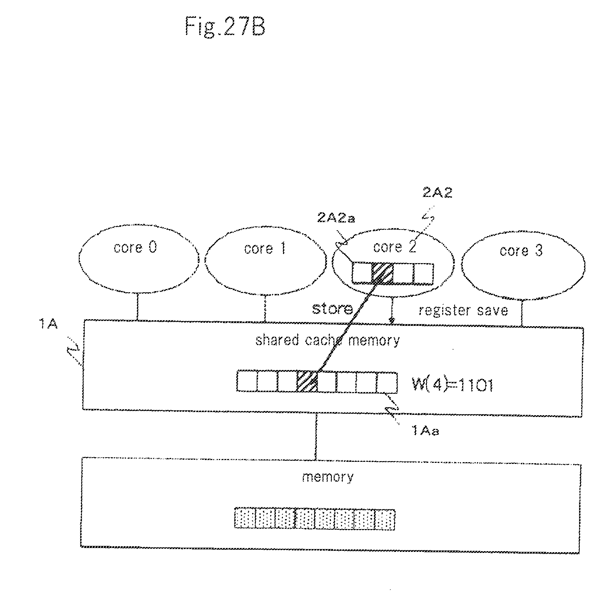

FIG. 27B is an explanatory view showing the operations when a register spill occurs in core 2A2 and a store command is executed to save data from register 2A2a.

At this time, a cache miss occurs in shared cache memory 1A at the time of writing of data, and block 1Aa that corresponds to the words indicated in the store command is allocated to shared cache memory 1A. The data, which is to be written to a particular word, is written to the fourth word of block 1Aa. W(4) of block 1Aa is next set to "1101."

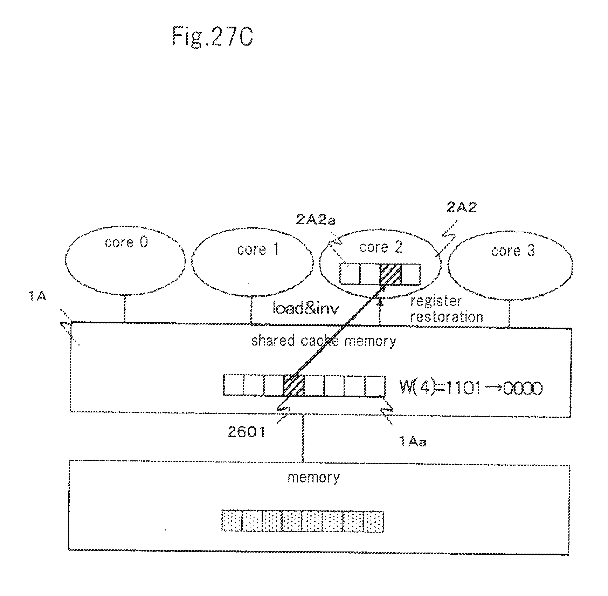

FIG. 27C is an explanatory view showing the operations of register restoration.

Data 2601 in shared cache memory 1 A is read to register 2A2a of core 2A2 in accordance with a load-and-invalidate command to restore the register. W(4) of block 1Aa is then changed to "0000."

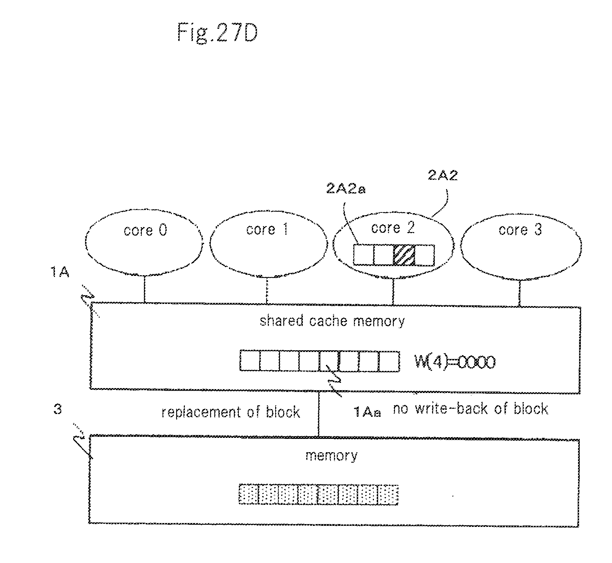

FIG. 27D is an explanatory view showing the operations when block 1Aa in shared cache memory 1A is replaced.

Because W=00000000 in block 1Aa, write-back of the data of block 1Aa to memory 3 does not occur.

As a result, the unnecessary memory access described in FIG. 1 does not occur in the second exemplary embodiment.

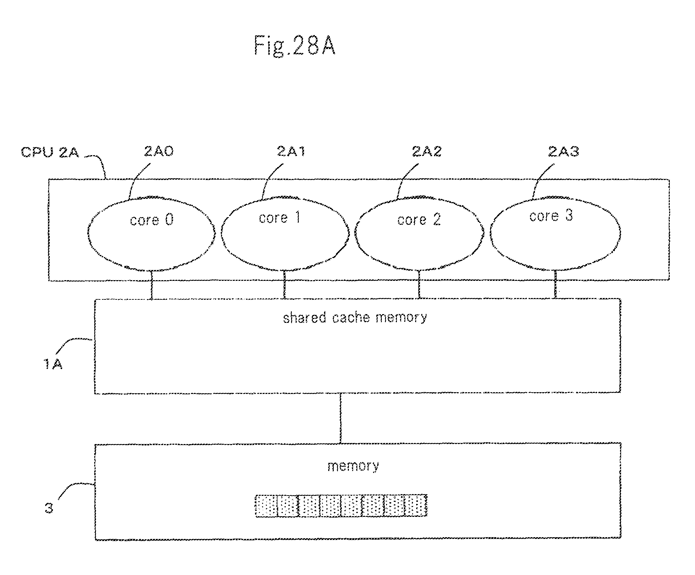

FIGs. 28A-28F are explanatory views for explaining an example of inter-core communication that employs a cache memory in the second exemplary embodiment. In FIGs. 28A-28F, elements that are identical to elements shown in FIGs. 27A-27D are given the same reference numbers.

FIG. 28A is an explanatory view showing the initial state.

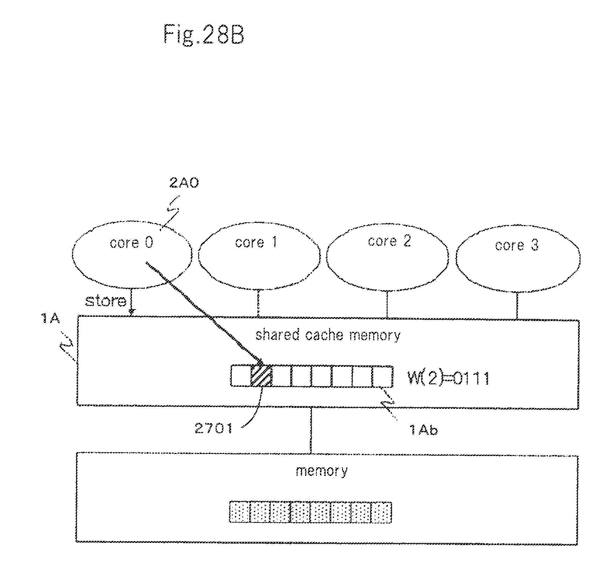

FIG. 28B is an explanatory view showing the operations by which core 2A0 stores (writes) data 2701 that are offered to another core in shared cache memory 1A.

When core 2A0 has executed a store command, a cache miss occurs at the time of writing of data in shared cache memory 1A and block 1Ab that corresponds to the word indicated in the store command is allocated to shared cache memory 1A. Data 2701, which is to be written, is written to the second word of block 1Ab. W(2) of block 1Ab is next set to "0111."

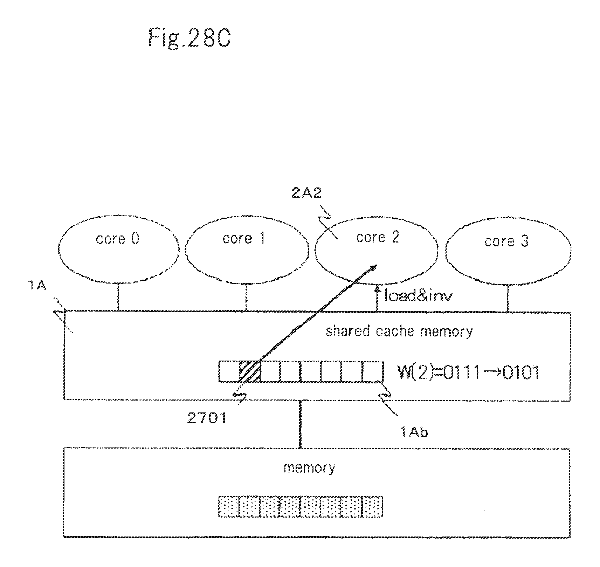

FIG. 28C is an explanatory view showing the operations by which core 2A2 uses a load-and-invalidate command to read data 2701.

Core 2A2 provides a load-and-invalidate command as output and reads data 2701 of block 1Ab in shared cache memory 1A. W(2) of block 1Ab next becomes "0101."

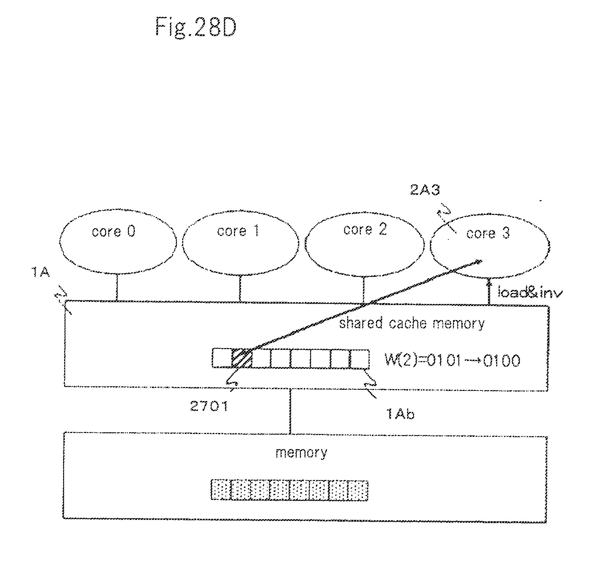

FIG. 28D is an explanatory view for showing the operations by which core 2A3 next uses a load-and-invalidate command to read data 2701.

Core 2A3 provides a load-and-invalidate command and reads data 2701 of block 1Ab in shared cache memory 1A. W(2) of block 1Ab next becomes "0100."

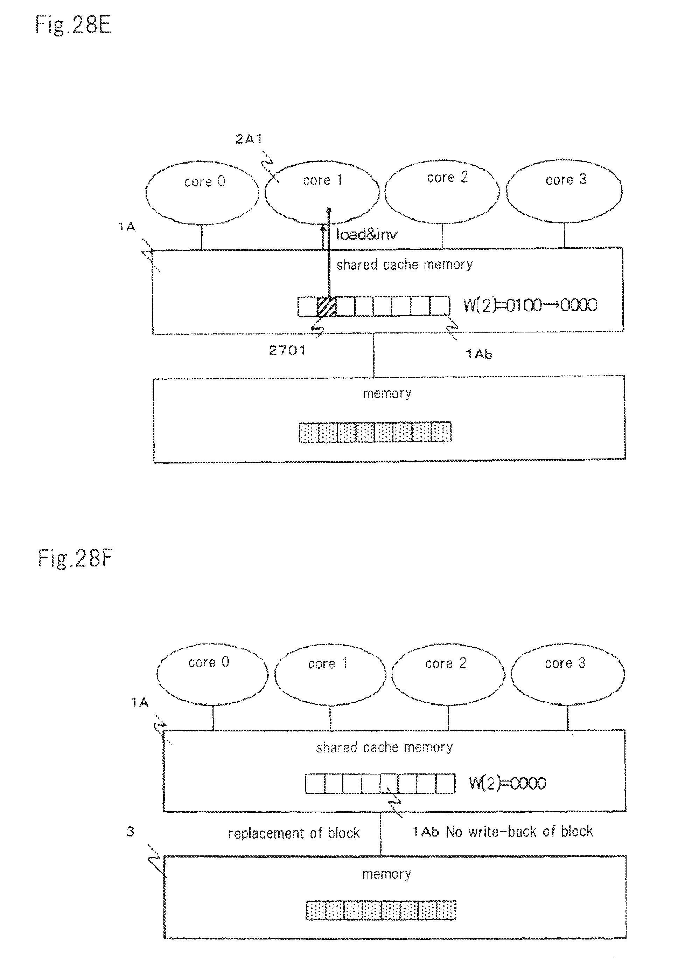

FIG. 28E is an explanatory view showing the operations by which core 2A1 uses a load-and-invalidate command to read data 2701.

Core 2A1 provides a load-and-invalidate command to read data 2701 of block 1Ab in shared cache memory 1A. W(2) of block 1Ab next becomes "0000."

FIG. 28F is an explanatory view showing the operations when block 1Ab in shared cache memory 1A is replaced.

Because W(2) is "0000" in block 1Ab, write-back of data of block 1Ab to memory 3 does not occur.

The present exemplary embodiment exhibits the same effects as those of the first exemplary embodiment.

In the present exemplary embodiment, control unit 1916 (write unit 1916a) allocates any one of the plurality of blocks in data array 1903 as a block for writing when CPU 2A has a plurality of cores and when the address from any of the plurality of cores is not in address array 1902 (the portion that stores m high-order bits 1906 for each offset that corresponds to n middle bits 1909) at the time of writing from this core. Control unit 1916 (write unit 1916a) then writes data from this core to any word in the block for writing.

Word information W(i) further indicates the core that offered the data that is written to the word indicated in the word information.

In this case, the word information can be used to confirm the core that wrote the data.

In the present exemplary embodiment, the word information further indicates, from among the plurality of cores, the cores that are to be the transmission destinations of data that have been written to words indicated in the word information.

In this case, the word information can be used to indicate the transmission destination of the data.

In the present exemplary embodiment, control unit 1916 (read unit 1916b) deletes the word information when all of the cores, which are the transmission destinations, have read the data from words indicated in the word information.

In this case, word information that has become unnecessary due to the completion of data transmission can be deleted.

The present exemplary embodiment can be applied to not only the cache memory of a single-core CPU but to the cache memory of a multi-core CPU.

An example of the effect of the present invention is enabling the avoidance of unnecessary memory accesses arising when a computation device such as a CPU or core writes temporary data to a cache memory.

While the invention has been particularly shown and described with reference to exemplary embodiments thereof, the invention is not limited to these exemplary embodiments. It will be understood by those of ordinary skill in the art that various changes in form and details may be made therein without departing from the spirit and scope of the present invention as defined by the claims.

An example 1 describes a cache memory system that is connected to a computation device and a memory device, said cache memory system comprising:
a data array that includes a plurality of blocks that are composed of a plurality of words;
storage means for, with respect to a block, which stores data in at least one of said words, from among said plurality of blocks, storing an address group of said memory device that is placed in correspondence with that block;
write means for, when an address from the computation device is not in said storage means on receiving a write instruction from said computation device, allocating any block of said plurality of blocks as a block for writing, and writing the data from the computation device to any word in the block for writing;
word state storage means for storing word information indicating one or more words, to which said data have been written by said write unit, from among words in said block for writing; and
read means for, upon having read said data from words indicated by said word information when receiving a read instruction from said computation device, deleting said word information.
An example 2 describes the cache memory system according to the example 1, wherein said read means deletes said word information when said data have been read from words indicated in said word information at the time of reading data in accordance with a first read command from said computation device, and does not delete said word information when said data have been read from words indicated in said word information at the time of reading data in accordance with a second read command from said computation device.
An example 3 describes the cache memory system according to the example 1 or 2, wherein:
said write means, when said computation device has a plurality of processor cores and, when at the time of writing data from any of said plurality of processor cores, address from one processor core of the plurality of processor cores is not in said storage means, allocates any block of said plurality of blocks as a block for writing and writes data from the processor core to any word in the block for writing; and
said word information further indicates the processor core that has provided data that have been written to words indicated in said word information.

An example 4 describes the cache memory system according to example 3, wherein said word information further indicates, from among said plurality of processor cores, one or more processor cores that are transmission destinations of data that have been written to words indicated in the word information.
An example 5 describes the cache memory system according to the example 4, wherein said read means deletes said word information when all processor cores that are said transmission destinations have read said data from words indicated in said word information.
An example 6 describes a cache memory control method that is carried out by a cache memory system that includes a data array that includes a plurality of blocks that are composed of a plurality of words, said cache memory system being connected to a computation device and a main memory device, said cache memory control method comprising:
storing, with respect to a block, which stores data in at least one of said words, from among said plurality of blocks, an address group of said shared memory, which has been placed in correspondence with that block, in a storage unit;
when an address from the computation device is not in said storage unit on receiving a write instruction from said computation device, allocating any block of said plurality of blocks as a block for writing and writing data from the computation device to any word in the block for writing;
storing in a word state storage unit word information indicating one or more words, to which said data have been written, from among words in said block for writing; and
when said data have been read from words indicated by said word information on receiving a read instruction from said computation device,
deleting said word information.
An example 7 describes the cache memory control method according to claim 6, wherein said deleting includes:
deleting said word information when said data have been read from words indicated by said word information at the time of reading data in accordance with a first read command from said computation device;
   and
not deleting said word information when said data have been read from words indicated by said word information at the time of reading data in accordance with a second read command from said computation device.
An example 8 describes the cache memory control method according to the example 6 or 7, wherein:
said writing includes, when said computation device has a plurality of processor cores and, when at the time of writing data from any of said plurality of processor cores, address from one processor core of the plurality of processor cores is not in said storage unit, allocating any block of said plurality of block as a block for writing and writing data from the processor core to any word in the block for writing; and
said word information further indicates the processor core that offered data that have been written to words indicated in the word information.
An example 9 describes the cache memory control method according to the example 8, wherein said word information further indicates, from among said plurality of processor cores, one or more processor cores that are transmission destinations of data that have been written to words indicated in the word information.
An example 10 describes the cache memory control method according to the example 9, wherein said deleting includes deleting said word information when all processor cores that are said transmission destinations have read said data from words indicated in said word information.

## Claims

1. A cache memory system that is connected to a computation device and a memory device, said cache memory system comprising:
a data array that includes a plurality of blocks that are composed of a plurality of words;
storage means for, with respect to a block, which stores data in at least one of said words, from among said plurality of blocks, storing an address group of said memory device that is placed in correspondence with that block;
write means for, when an address from the computation device is not in said storage means on receiving a write instruction from said computation device, allocating any block of said plurality of blocks as a block for writing, and writing the data from the computation device to any word in the block for writing;
word state storage means for storing word information indicating one or more words, to which said data have been written by said write unit, from among words in said block for writing; and
read means for, upon having read said data from words indicated by said word information when receiving a read instruction from said computation device, deleting said word information.

2. The cache memory system according to claim 1, wherein said read means deletes said word information when said data have been read from words indicated in said word information at the time of reading data in accordance with a first read command from said computation device, and does not delete said word information when said data have been read from words indicated in said word information at the time of reading data in accordance with a second read command from said computation device.

3. The cache memory system according to claim 1 or 2, wherein:
said write means, when said computation device has a plurality of processor cores and, when at the time of writing data from any of said plurality of processor cores, address from one processor core of the plurality of processor cores is not in said storage means, allocates any block of said plurality of blocks as a block for writing and writes data from the processor core to any word in the block for writing; and
said word information further indicates the processor core that has provided data that have been written to words indicated in said word information.

4. The cache memory system according to claim 3, wherein said word information further indicates, from among said plurality of processor cores, one or more processor cores that are transmission destinations of data that have been written to words indicated in the word information.

5. The cache memory system according to claim 4, wherein said read means deletes said word information when all processor cores that are said transmission destinations have read said data from words indicated in said word information.

6. A cache memory control method that is carried out by a cache memory system that includes a data array that includes a plurality of blocks that are composed of a plurality of words, said cache memory system being connected to a computation device and a main memory device, said cache memory control method comprising:
storing, with respect to a block, which stores data in at least one of said words, from among said plurality of blocks, an address group of said shared memory, which has been placed in correspondence with that block, in a storage unit;
when an address from the computation device is not in said storage unit on receiving a write instruction from said computation device, allocating any block of said plurality of blocks as a block for writing and writing data from the computation device to any word in the block for writing;
storing in a word state storage unit word information indicating one or more words, to which said data have been written, from among words in said block for writing; and
when said data have been read from words indicated by said word information on receiving a read instruction from said computation device, deleting said word information.

7. The cache memory control method according to claim 6, wherein said deleting includes:
deleting said word information when said data have been read from words indicated by said word information at the time of reading data in accordance with a first read command from said computation device; and
not deleting said word information when said data have been read from words indicated by said word information at the time of reading data in accordance with a second read command from said computation device.

8. The cache memory control method according to claim 6 or 7, wherein:
said writing includes, when said computation device has a plurality of processor cores and, when at the time of writing of data from any of said plurality of processor cores, address from one processor core of the plurality of processor cores is not in said storage unit, allocating any block of said plurality of block as a block for writing and writing data from the processor core to any word in the block for writing; and
said word information further indicates the processor core that offered data that have been written to words indicated in the word information.

9. The cache memory control method according to claim 8, wherein said word information further indicates, from among said plurality of processor cores, one or more processor cores that are transmission destinations of data that have been written to words indicated in the word information.

10. The cache memory control method according to claim 9, wherein said deleting includes deleting said word information when all processor cores that are said transmission destinations have read said data from words indicated in said word information.
